(19) Europäisches Patentamt
European Patent Office
Office européen des brevets

(11) **EP 1 865 400 A1**

(12) **EUROPÄISCHE PATENTANMELDUNG**

(43) Veröffentlichungstag:
**12.12.2007 Patentblatt 2007/50**

(51) Int Cl.:
***G06F 1/08*** *(2006.01)*

(21) Anmeldenummer: **07010923.6**

(22) Anmeldetag: **02.06.2007**

(84) Benannte Vertragsstaaten:
**AT BE BG CH CY CZ DE DK EE ES FI FR GB GR
HU IE IS IT LI LT LU LV MC MT NL PL PT RO SE
SI SK TR**
Benannte Erstreckungsstaaten:
**AL BA HR MK YU**

(30) Priorität: **09.06.2006 DE 102006026914**

(71) Anmelder: **ATMEL Germany GmbH
74072 Heilbronn (DE)**

(72) Erfinder: **Lepek, Paul
01465 Langebrück (DE)**

(54) **Verfahren zum Umschalten eines Systemtakts und Taktsynchronisierungsvorrichtung**

(57) Vorgeschlagen wird eine Taktsynchronisierungsvorrichtung (2) für ein elektronisches System (3), insbesondere für einen Mikroprozessor, aufweisend:
- einen ersten Eingang (2.1) für ein erstes Taktsignal (CLK_A),
- einen zweiten Eingang (2.2) für ein zweites Taktsignal (CLK_B),
- einen dritten Eingang (2.3) für ein Auswahl-Steuersignal (SEL),
- einen Ausgang (2.4) für ein Systemtakt-Signal (SYS_CLK). gekennzeichnet durch
- ein erstes Steuermodul (2.5), das durch das erste Taktsignal (CLK_A) gesteuert ist,
- ein zweites Steuermodul (2.6), das durch das zweite Taktsignal (CLK_B) gesteuert ist und das signaltechnisch mit dem ersten Steuermodul (2.5) verbunden ist,

wobei das erste Steuermodul (2.5) bei Anliegen eines vorbestimmten Signalpegels des Auswahl-Steuersignals (SEL) an dem dritten Eingang (2.3) synchron mit dem ersten Taktsignal (CLK_A) zum Setzen des Systemtakt-Signals (SYS_CLK) von dem ersten Taktsignal (CLK_A) auf einen vorbestimmten logischen Signalpegel als Systemtakt-Haltesignal ausgebildet ist und wobei das zweite Steuermodul (2.6) synchron mit dem zweiten Taktsignal (CLK_B) zum Zurücksetzen des Systemtakt-Haltesignals und zum Veranlassen einer Ausgabe des zweiten Taktsignals (CLK_B) als Systemtakt-Signal (SYS_CLK) ausgebildet ist.

FIG. 2

**Beschreibung**

Die vorliegende Erfindung betrifft ein Verfahren nach dem Oberbegriff des Patentanspruchs 1 zum Umschalten eines Systemtakts von einem ersten Taktsignal auf ein zweites Taktsignal, wobei der Umschaltvorgang durch ein Auswahl-Steuersignal ausgelöst wird und das Umschalten synchron zu dem ersten und/oder zweiten Taktsignal erfolgt.

Weiterhin betrifft die vorliegende Erfindung eine Taktsynchronisierungsvorrichtung für ein elektronisches System, insbesondere für einen Mikroprozessor, nach dem Oberbegriff des Patentanspruchs 6, aufweisend einen ersten Eingang für ein erstes Taktsignal, einen zweiten Eingang für ein zweites Taktsignal, einen dritten Eingang für ein Auswahl-Steuersignal und einen Ausgang für ein Systemtakt-Signal.

Darüber hinaus betrifft die vorliegende Erfindung eines Prozessoreinheit und eine Verwendung des erfindungsgemäßen Verfahrens.

Zur Steuerung von elektronischen Systemen, wie insbesondere einer Prozessoreinheit in Form eines Mikroprozessors, ist es regelmäßig erforderlich, anwendungsspezifisch eine Auswahl aus einer Mehrzahl von extern angelegten asynchronen Taktsignalen zu treffen. Dabei kann je nach Anforderungsprofil ein regelmäßiges Umschalten zwischen unterschiedlichen Taktsignalen zur Ausgabe eines entsprechend veränderten System-Taktsignals erforderlich sein. Ein solcher Umschaltvorgang ist aber auch insbesondere dann erforderlich, wenn eines der externen Taktsignale fehlerhaft ist bzw. wenn eine entsprechende externe Taktsignal-Quelle vollständig ausfällt.

Aus der US 6,873,183 B1 ist ein Verfahren und eine Schaltungsanordnung zum Umschalten eines Systemtakts bekannt, bei dem die Taktumschaltung von einem ersten Taktsignal auf ein zweites Taktsignal als System-Taktsignal asynchron erfolgt. Gemäß der dortigen Offenbarung wird nach Maßgabe eines Umschalt-Auswahlsignals durch eine asynchrone Zustandsmaschine (state machine) das bis dahin als System-Taktsignal maßgebliche Taktsignal unmittelbar, d. h. asynchron unabhängig von seinem gegenwärtigen Zustand "eingefroren". Anschließend wird mittels eines bekannten Detektors, der regelmäßig spezielle, d.h. nicht standardmäßige analoge Schaltelemente aufweist, der Zeitpunkt eines Übergangs des jeweils anderen Taktsignals, auf das umgeschaltet werden soll, in den "eingefrorenen" Zustand bestimmt, woraufhin durch die asynchrone Zustandsmaschine das Taktsignal in diesem Zeitpunkt von dem "eingefrorenen" Zustand auf das neue Taktsignal umgeschaltet wird, wodurch sich ungewollte Spikes bei der Systemtakt-Umschaltung vermeiden lassen.

Nachteilig an der vorstehend beschriebenen Schaltungsanordnung und dem bei ihrem Einsatz ausführbaren Verfahren ist, dass aufgrund der verwendeten analogen Schaltungselemente keine ausreichende Synthesefähigkeit mittels gängiger (Software-)Synthesewerkzeuge gegeben ist, zudem erfordert die zumindest teilweise analoge Ausgestaltung der vorhandenen asynchronen Zustandsmaschine einen hohen Aufwand bei der Herstellung, was sich in entsprechenden Kostennachteilen bemerkbar macht. Darüber hinaus können sich aufgrund der beschriebenen asynchronen Arbeitsweise beim Umschalten Taktverlängerungen und -verkürzungen ergeben, was sich negativ auf das Verhalten von durch das System-Taktsignal gesteuerten elektronischen Systemen, wie beispielsweise einen Mikroprozessor, auswirkt.

Aus den Druckschriften US 5,675,165 B1 und US 6,107,841 B1 sind dagegen Vorrichtungen und Verfahren zum synchronen Umschalten von Taktsignalen bekannt, die jedoch nach den dort beschriebenen Ausgestaltung insbesondre nur relativ beschränkt und unflexibel einsetzbar sind. Insbesondere der Gegenstand der US 5,675,165 besitzt darüber hinaus in nachteiliger Weise an Übermaß an Komplexität, da seine Wirkungsweise von einer Umschaltrichtung des Systemtaktes (von hoher zu niedriger Frequenz oder umgekehrt) abhängig gemacht wird.

Der Erfindung liegt die Aufgabe zugrunde, unter Vermeidung der vorstehend aufgeführten Nachteile ein Verfahren und eine Vorrichtung der jeweils eingangs genannten Art dahingehend weiterzuentwickeln, dass diese ohne komplexe Anordnungen von Schaltungselementen, insbesondere analogen Schaltungselementen, auskommen, sodass insbesondere eine verbilligte Herstellung und eine verbesserte Synthesefähigkeit erreicht werden, wobei zudem während eines Umschaltvorgangs keine unerwünschten Taktverkürzungen oder -verlängerungen auftreten sollen. Außerdem soll eine möglichst unbeschränkte, flexible Einsetzbarkeit gewährleistet sein.

Die Aufgabe wird bei einem Verfahren der eingangs genannten Art durch die kennzeichnenden Merkmale des Patentanspruchs 1 und bei einer Vorrichtung der eingangs genannten Art durch die kennzeichnenden Merkmale des Patentanspruchs 6 gelöst. Vorteilhafte Weiterbildungen des erfindungsgemäßen Verfahrens bzw. der erfindungsgemäßen Vorrichtung sind Gegenstand von Unteransprüchen.

Erfindungsgemäß ist ein Verfahren zum Umschalten eines Systemtakts von einem ersten Taktsignal auf ein zweites Taktsignal, wobei der Umschaltvorgang durch ein Auswahl-Steuersignal ausgelöst wird und das Umschalten synchron zu dem ersten und/oder zweiten Taktsignal erfolgt, dadurch gekennzeichnet, dass die Taktsteuerung von einer vorbestimmten Flanke des ersten Taktsignals auf eine entsprechende Flanke des zweiten Taktsignals übertragen wird, wobei ein Systemtakt-Signal nach Maßgabe des ersten Taktsignals auf einem ersten vorbestimmten logischen Signalpegel als Systemtakt-Haltesignal gehalten wird, wobei auf eine entsprechende Flanke des zweiten Taktsignals gewartet wird und wobei nach Maßgabe des zweiten Taktsignals das Systemtakt-Haltesignal auf einen zweiten logischen Zustand zurückgesetzt und zugleich das Systemtakt-Signal unter Verwendung des zweiten Taktsignals reaktiviert wird. Auf diese Weise wird der Systemtakt-Umschaltvorgang zwar durch das Auswahl-Steuersignal ausgelöst bzw. angestoßen, erfolgt jedoch anschließend vollständig nach Maßgabe der ersten und zweiten Taktsignale, die sich die Taktsteuerung gemäß dem vorstehend umrissenen Wechselspiel untereinander synchron übergeben.

Entsprechend ist eine erfindungsgemäße Taktsynchronisierungsvorrichtung für ein elektronisches System, insbesondere für einen Mikroprozessor, aufweisend: einen ersten Eingang für ein erstes Taktsignal, einen zweiten Eingang für ein zweites Taktsignal, einen dritten Eingang für ein Auswahl-Steuersignal und einen Ausgang für ein Systemtakt-Signal, gekennzeichnet durch ein erstes Steuermodul, das durch das erste Taktsignal gesteuert ist und ein zweites Steuermodul, das durch das zweite Taktsignal gesteuert ist und das signaltechnisch mit dem ersten Steuermodul verbunden ist, wobei das erste Steuermodul bei Anliegen eines vorbestimmten Signalpegels des Auswahl-Steuersignals an dem dritten Eingang synchron mit dem ersten Taktsignal zum Setzen des Systemtakt-Signals von dem ersten Taktsignal auf einen vorbestimmten logischen Signalpegel als Systemtakt-Haltesignal ausgebildet ist und wobei das zweite Steuermodul synchron mit dem zweiten Taktsignal zum Zurücksetzen des Systemtakt-Haltesignals und zum Veranlassen einer Ausgabe des zweiten Taktsignals als Systemtakt-Signal ausgebildet ist.

Ein Grundgedanke der vorliegenden Erfindung ist somit, dass das Umschalten eines System-Taktsignals von einem ersten Taktsignal auf ein zweites Taktsignal synchron zu wenigstens einem der ersten und zweiten Taktsignale erfolgt, wodurch sich die eingangs erwähnten unerwünschten Taktverkürzungen und -verlängerungen vermeiden lassen. Die erfindungsgemäße Taktsynchronisierungsvorrichtung ist zum Durchführen eines derartigen synchronen Umschaltverfahrens derart ausgebildet, dass eine vollständig digitale Realisierung möglich ist, was zu der angestrebten Kostenreduzierung und verbesserten Synthesefähigkeit führt.

Im Zuge einer weiteren Ausgestaltung des erfindungsgemäßen Verfahrens ist vorgesehen, dass

- nach Maßgabe des Auswahl-Steuersignals durch ein erstes Steuermodul für das erste Taktsignal ein erstes Takt-Haltesignal synchron zu dem ersten Taktsignal erzeugt wird,
- das erste Takt-Haltesignal an ein zweites Steuermodul für das zweite Taktsignal weitergeleitet wird,
- durch das zweite Steuermodul ein zweites Takt-Haltesignal synchron zu dem zweiten Taktsignal erzeugt wird,
- aus den ersten und zweiten Taktsignalen das Systemtakt-Haltesignal erzeugt wird,
- das zweite Takt-Haltesignal an das erste Steuermodul weitergeleitet wird und

- ein Zustand des ersten Takt-Haltesignals in Abhängigkeit von dem weitergeleiteten zweiten Takt-Haltesignal verändert wird.

Auf diese Weise führen die ersten und zweiten Steuermodule im Rahmen einer Master-Slave-Abhängigkeit ein so genanntes Handshake-Verfahren durch, um sich in synchroner Weise gegenseitig über den ausgelösten Umschaltvorgang zu unterrichten und das Umschalten des Systemtakts vorzunehmen.

Bei einer Weiterbildung der erfindungsgemäßen Taktsynchronisierungsvorrichtung ist zum Durchführen des weiter oben bereits erläuterten Handshake-Verfahrens vorgesehen, dass

- das erste Steuermodul nach Maßgabe des Auswahl-Steuersignals zum Erzeugen eines ersten Takt-Haltesignals und zum Weiterleiten desselben an das zweite Steuermodul ausgebildet ist,
- das zweite Steuermodul bei Empfang des ersten Takt-Haltesignals zum Erzeugen eines zweiten Takt-Haltesignals und zum Weiterleiten desselben an das erste Steuermodul ausgebildet ist,
- das erste Steuermodul zum Zurücksetzen des ersten Takt-Haltesignals bei Empfang des zweiten Takt-Haltesignals ausgebildet ist und
- das zweite Steuermodul zum Zurücksetzen des zweiten Takt-Haltesignals ausgebildet ist.

Weiterhin ist zum Erzeugen des Systemtakt-Haltesignals bei einer anderen Weiterbildung der erfindungsgemäßen Taktsynchronisierungsvorrichtung ein Schaltungselement vorgesehen, das zum Erzeugen eines globalen Takt-Haltesignals als Vorläufer des Systemtakt-Haltesignals aus wenigstens den ersten und zweiten Takt-Haltesignalen ausgebildet ist. Das betreffende Schaltungselement kann dabei insbesondere als logisches OR-Gatter ausgebildet sein. Mit anderen Worten: durch das OR-Gatter wird ein Takt- Haltesignal aus einem ersten Zeitbereich (beispielsweise dem Bereich des ersten Taktsignals) in einen zweiten Zeitbereich (Bereich des zweiten Taktsignals) übergeben.

Optional kann dabei in Weiterbildung des erfindungsgemäßen Verfahrens vorgesehen sein, dass eine Zeit seit Anlegen des Auswahl-Steuersignals bestimmt wird und dass das Umschalten des Systemtakt-Signals bei Erreichen einer vorgegebenen Zeitschwelle freigegeben wird. Dabei kann die Zeitschwelle insbesondere durch einen Benutzer im Zuge einer softwaretechnischen Konfiguration eines zu steuernden Systems vorgegeben werden.

Eine entsprechende Weiterbildung der erfindungsgemäßen Taktsynchronisierungsvorrichtung sieht vor, dass zumindest das erste Steuermodul einen Zähler aufweist, der zum Bestimmen einer Zeit in Abhängigkeit von dem Auswahl-Steuersignal ausgebildet ist.

In einem System, in dem der Ursprung einer Taktquelle nicht in einfacher Weise vorhersagbar beziehungsweise ermittelbar ist, kann es vorkommen, dass die Taktquelle beziehungsweise das entsprechende Taktsignal eines avisierten Umschaltvorgangs nicht länger verfügbar ist, da zum Beispiel die Eingangsleitung getrennt wurde, oder ein vollständiger Ausfall der Quelle vorliegt. Um das Umschalten auf einen ausgefallenen oder fehlerhaften Takt zu vermeiden, ist erfindungsgemäß vorgesehen, eine neue Taktquelle beziehungsweise einen neuen Takt, auf den umgeschaltet werden soll, zu erkennen und zu bestätigen, bevor die eigentliche Taktumschaltung erfolgt. Dies geschieht erfindungsgemäß durch das Einschalten oder Freigeben einer Sicherheitsfunktion (Timeout-Funktion).

Die Sicherheits-/Timeout-Funktion ist ein einfacher Mechanismus, der nach einer vorbestimmten Abstast-Flanke, insbesondere einer steigenden Flanke, des neuen (System-)Taktsignals sucht, bevor der eigentliche Umschaltvorgang erfolgt, und der das Umschalten nur erlaubt, wenn die genannte vorbestimmte Flanke innerhalb eines vorbestimmten Zeitintervalls liegt, das durch einen entsprechenden Zähler überwacht wird. Der Zähler legt ein Zeitintervall fest, innerhalb dessen das Slave-Steuermodul ein durch das Master-Steuermodul zu bestätigendes Feedback-Takthaltesignal erzeugen kann. Wenn das Feedbacksignal nicht innerhalb der vorgesehenen Zeitempfangen wird, annulliert das Master-Steuermodul sein ursprünglich gesetztes Takt-Haltsignal, und der Taktumschaltungsvorgang wird abgebrochen.

Alternativ oder zusätzlich kann eine entsprechende Timeout-Logik auch als ein Mittel zum Erfassen und zur Steuerung eines Taktumschaltungs-Verzögerungsintervall eingesetzt werden, wobei die Takt-Umschaltungsverzögerung in Einheiten von Perioden des primären System-Taktsignals, das heißt desjenigen Taktsignals, das gegenwärtig als System-Taktsignal fungiert, bestimmt werden kann.

Um ein versuchtes Umschalten des System-Taktsignals während eines gewissen Zeitraums, insbesondere vor dem optionalen Erreichen eines Zähler-Endwerts zu verhindern, ist im Zuge einer weiteren Ausgestaltung der erfindungsgemäßen Taktsynchronisierungsvorrichtung vorgesehen, dass zumindest das erste Steuermodul zum Erzeugen eines Taktumschaltungs-Sperrsignals in Abhängigkeit von dem Auswahl-Steuersignal ausgebildet ist, das zum Verhindern eines Zurücksetzens des Systemtakt-Haltesignals an das zweite Steuermodul angelegt ist.

Darüber hinaus ist in Weiterbildung der erfindungsgemäßen Taktsynchronisierungsvorrichtung in vorteilhafter Weise vorgesehen, dass das erste Steuermodul zum Abschalten des Taktumschaltungs-Sperrsignals bei Erreichen einer vorgegebenen Zeitschwelle ausgebildet ist.

Vorzugsweise beträgt die Zeitschwelle mindestens $2 \cdot T_s$, wobei $T_s$ eine Periodendauer des zweiten Taktsignals (sekundäres Taktsignal) bezeichnet. Eine derartige Randbedingung ist insbesondere dann von Bedeutung, wenn die ersten und zweiten Taktsignale, zwischen denen umgeschaltet werden soll, eine deutlich voneinander abweichende Periodendauer besitzen, sodass durch eine entsprechende gewählte Zeitschwelle sichergestellt werden muss, dass innerhalb des so definierten Zeitfensters eine entsprechende Flanke des zweiten Taktsignals gefunden wird.

Bei einer entsprechenden Weiterbildung der erfindungsgemäßen Taktsynchronisierungsvorrichtung ist vorgesehen, dass die Zeitschwelle durch einen Nutzer insbesondere softwaretechnisch vorgebbar ist, wobei die Zeitschwelle insbesondere mindestens $2 \cdot T_s$ beträgt, wobei $T_s$ eine Periodendauer des zweiten Taktsignals bezeichnet.

Darüber hinaus kann optional vorgesehen sein, dass ein Umschaltvorgang ausgesetzt wird, wenn eine entsprechende Flanke des zweiten Taktsignals, auf die gewartet wird, gar nicht beziehungsweise nicht innerhalb eines vorbestimmten Zeitfensters kommt, was zum Beispiel auf eine ausgefallene Takt-Quelle hinweist. In diesem Zusammenhang wird der Umschaltbefehl gehalten und das bisherige (erste) Taktsignal als Systemtakt beibehalten. Vorrichtungstechnisch kann zu diesem Zweck insbesondere ein weiterer Zähler vorgesehen sein. Vorteilhafter Weise wird jedoch nur ein einziger Zähler zum Aktivieren des zweiten Taktsignals, wie verstehend beschrieben, und zum Vorgeben eines Zeitfensters für eine ausfallsichere Taktumschaltung eingesetzt.

Eine andere Weiterbildung des erfindungsgemäßen Verfahrens sieht vor, dass die ersten und zweiten Taktsignale jeweils aus einer Mehrzahl von Taktsignalen ausgewählt werden. Auf diese Weise ist eine optimal anwendungsspezifische Umschaltung von System-Taktsignalen möglich.

In entsprechender Weiterbildung der erfindungsgemäßen Taktsynchronisierungsvorrichtung weist diese jeweils einen Multiplexer in Wirkverbindung mit den ersten und zweiten Eingängen auf, die zum Auswählen des ersten und zweiten Taktsignals aus jeweils einer Mehrzahl von Taktsignalen ausgebildet sind.

Die erfindungsgemäße Taktsynchronisierungsvorrichtung lässt sich in vorteilhafter Weise insbesondere in einer Prozessoreinheit, insbesondere in einem Mikroprozessor, zur Steuerung derselben einsetzen. Entsprechend ergibt sich eine bevorzugte Verwendung des erfindungsgemäßen Verfahrens zum Umschalten des Systemtakts bei einer Prozessoreinheit, insbesondere einem Mikroprozessor.

Auf diese Weise schafft die vorliegende Erfindung im Rahmen der aufgeführten Ausgestaltungen eine Taktumschalt- bzw. -synchronisierungsvorrichtung, die in der Lage ist, in synchroner Weise von einer (ersten) Taktquelle auf eine andere (zweite) Taktquelle umzuschalten. Nach dem Vorstehenden besitzt die Vorrichtung hierzu grundsätzlich zunächst Mittel zum Auswählen einer neuen (zweiten) Taktquelle, deren Taktsignal als Systemtakt-Signal verwendet werden soll. Weiterhin hat die Vorrichtung asynchron arbeitende Mittel zum Abtasten eines Takteingangs, die unter Verwendung kreuzweise gekoppelter Synchronisierungsblöcke (Steuermodule) eine Anzahl von Steuer-/Statussignalen, insbesondere Takt-Haltesignale, generieren. Darüber hinaus besitzt die Vorrichtung Mittel zum asynchronen Abfragen der Steuersignale (Takt-Haltesignale), um aus diesen ein übergeordnetes globales Takt-Haltsignal zu erzeugen. Dieses stoppt - solange es aktiviert ist - den Systemtakt ("Einfrieren" des Systemtakts). Eine Takt-Umschaltverzögerung kann mittels eines internen Timers gesteuert werden. Darüber hinaus kann im Rahmen der vorliegenden Erfindung eine Fehlersicherung vorgesehen sein, die ein maßgebliches Merkmal des zweiten Taktsignals erkennt und danach entscheidet, ob ein Umschalten auf das neue (zweite) Taktsignal erfolgen soll.

Weitere Eigenschaften und Vorteile der vorliegenden Erfindung ergeben sich aus der nachfolgenden Beschreibung eines Ausführungsbeispiels anhand der Zeichnung. Es zeigt/zeigen:

Fig. 1          ein schematisches Blockschaltbild einer Schaltungsanordnung mit einer erfindungsgemäßen Taktsynchronisierungsvorrichtung für ein elektronisches System bei Verwendung mit bzw. in einem Mikroprozessor;

Fig. 2          ein detailliertes Blockschaltbild einer ersten Ausgestaltung der erfindungsgemäßen Taktsynchronisierungsvorrichtung;

Fig. 3          ein detailliertes Blockschaltbild eines ersten Steuermoduls der Taktsynchronisierungsvorrichtung gemäß Fig. 2;

Fig. 4a-d:    logische Schaltdiagramme zur Darstellung der Erzeugung von Steuersignalen in einem Steuerblock gemäß Fig. 3;

Fig. 5:         ein logisches Schaltdiagramm zur Darstellung der Erzeugung eines Zähler-Freigabesignals in Fig. 3;

Fig. 6:         detailliert einen Schaltungsaufbau zum Erzeugen eines Takt-Haltesignals;

Fig. 7:         detailliert eine Schaltungsanordnung zum Erzeugen eines Taktumschaltungs-Sperrsignals;

Fig. 8:         detailliert eine Schaltungsanordnung zum Erzeugen eines Gattersignals;

Fig. 9:         detailliert eine Schaltungsanordnung zum Erzeugen eines ersten Auswahlsignals;

Fig. 10:       detailliert eine logische Schaltungsanordnung eines Taktgatters gemäß Fig. 2;

Fig. 11:       detailliert eine Schaltungsanordnung zum Erzeugen eines Zählersignals;

Fig. 12:       detailliert eine Schaltungsanordnung zum Erzeugen eines globalen Takt-Haltesignals;

Fig. 13a,b    ein Zeitablauf-Diagramm zur Erläuterung eines Betriebs der erfindungsgemäßen Taktsynchronisierungsvorrichtung bzw. zur Darstellung eines erfindungsgemäßen Verfahrens zum Umschalten eines Systemtakts;

Fig. 14:       eine tabellarische Übersicht möglicher Zustände eines Ausgangssignals eines Zustandsdekodierers in einer erfindungsgemäßen Taktsynchronisierungsvorrichtung in Abhängigkeit von möglichen Eingangswerten;

Fig. 15:       in tabellarischer Form die Ausgabe des Takt-Gatters in Fig. 2in Abhängigkeit von anliegenden Eingangssignalen;

Fig. 16:       ein Zustandsdiagramm zur Darstellung des Ablaufs einer Ausgestaltung des erfindungsgemäßen Verfahrens beim Umschalten des Systemtakts von einem ersten auf ein zweites Taktsignal; und

Fig. 17        ein der Fig. 16 entsprechendes Zustandsdiagramm für ein Umschalten des Systemtakts von dem zweiten Taktsignal zurück auf das erste Taktsignal.

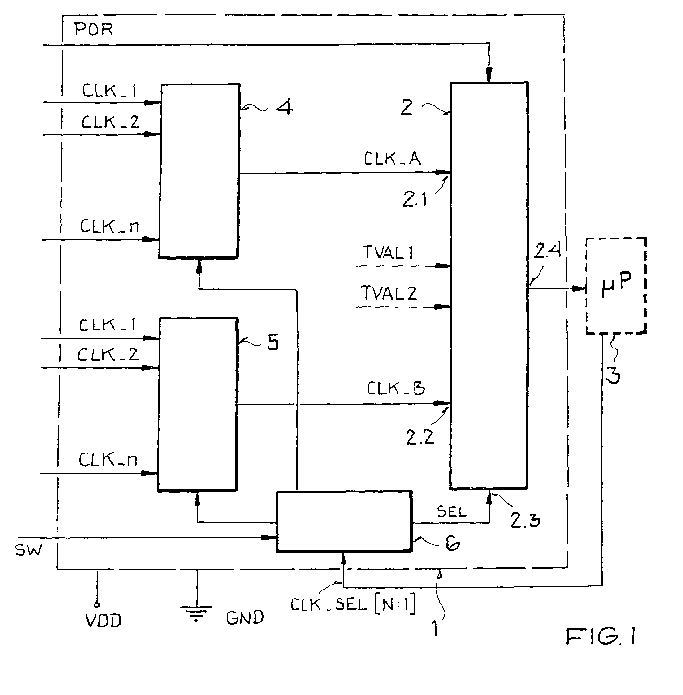

Fig. 1 zeigt anhand eines schematischen Blockschaltbilds eine Ausgestaltung einer Schaltungsanordnung 1, die unter anderem eine erfindungsgemäße Taktsynchronisierungsvorrichtung 2 aufweist und die zur Verwendung mit einer Prozessoreinheit, wie einem Mikroprozessor 3, vorgesehen ist. Abweichend von der Darstellung in Fig. 1 kann die Schaltungsanordnung 1 mit der erfindungsgemäßen Taktsynchronisierungsvorrichtung 2 auch in die Prozessoreinheit 3 integriert sein.

Zusätzlich zu der bereits erwähnten Taktsynchronisierungsvorrichtung 2 weist die Schaltungsanordnung 1 gemäß Fig. 1 einen ersten Multiplexer 4 und einen zweiten Multiplexer 5 auf, die mit der Taktsynchronisierungsvorrichtung 2 in signaltechnischer Wirkverbindung stehen. Der erste Multiplexer 4 besitzt n Eingänge für externe Taktsignale CLK_1, CLK_2, ..., CLK_n, und der zweite Multiplexer 5 besitzt ebenfalls n Eingänge für externe Taktsignale CLK_1, CLK_2, ..., CLK_n. Weiterhin weist die Schaltungsanordnung 1 gemäß Fig. 1 eine Steuereinheit 6 auf, die sowohl mit den ersten und zweiten Multiplexern 4, 5 als auch mit der Taktsynchronisierungsvorrichtung 2 in signaltechnischer Wirkverbindung steht. Zumindest an der Taktsynchronisierungsvorrichtung 2 ist darüber hinaus ein weiterer Eingang POR für ein Reset-Signal (Power-on Reset) vorgesehen. Die Taktsynchronisierungsvorrichtung 2 hat einen ersten Eingang 2.1, einen zweiten Eingang 2.2 sowie einen dritten Eingang 2.3. Darüber hinaus weist die Taktsynchronisierungsvorrichtung 2 einen Ausgang 2.4 auf, sowie weitere Anschlüsse für eine Versorgungsspannung VDD, ein Referenzpotential (Erde beziehungsweise Masse) GND und für (Nutzer-) Eingabewerte TVAL1, TVAL2, auf die später noch eingegangen wird.

An der Steuereinheit 6 liegen ein erstes Steuersignal CLK_SEL[n:1] und ein zweites Steuersignal SW an. Das erste Steuersignal CLK_SEL[n:1] wird von der Prozessoreinheit 3 oder - abweichend von der Ausgestaltung der Fig. 1 - von einer weiteren externen Einheit (nicht gezeigt) geliefert und kann bezogen auf die Taktsignale CLK_1, CLK_2, ..., CLK_n asynchron sein. Das zweite (externe) Steuersignal SW aktiviert ggf. die Veranlassung einer Taktumschaltung auf das durch das erste Steuersignal CLK_SEL[n:1] bestimmte Taktsignal CLK_1, CLK_2,..., CLK_n.

An dem ersten Eingang 2.1 der Taktsynchronisierungsvorrichtung 2 liegt ein erstes Taktsignal CLK_A an, das von dem ersten Multiplexer 4 nach Maßgabe der Steuereinheit 6 aus der extern vorgegebenen Anzahl von Taktsignalen CLK_1, ..., CLK_n ausgewählt wurde. Entsprechend liegt am Eingang 2.2 der Taktsynchronisierungsvorrichtung 2 ein anderes, zweites Taktsignal CLK_B, das von dem zweiten Multiplexer 5 nach Maßgabe der Steuereinheit 6 aus der extern vorgegebenen Anzahl von Steuersignalen CLK_1, ..., CLK_n ausgewählt wurde und das zu dem ersten Taktsignal asynchron ist. An dem dritten Eingang 2.3 der Taktsynchronisierungsvorrichtung 2 liegt ein von der Steuereinheit 6 bereitgestelltes Umschaltsignal oder Auswahl-Steuersignal SEL an, welches einen Umschaltvorgang zum erfindungsgemäßen Umschalten eines Systemtaktes auslöst, wie nachfolgend noch detaillierter beschrieben wird. Am Ausgang 2.4 wird durch die Taktsynchronisierungsvorrichtung 2 ein Systemtakt-Signal SYS_CLK an die Prozessoreinheit 3 ausgegeben, wobei es sich bei dem Systemtakt-Signal SYS_CLK auch um ein Systemtakt-Haltesignal handeln kann, wie nachfolgend ebenfalls noch detailliert beschrieben wird.

Der durch die Steuereinheit 6 mittels des Auswahl-Steuersignals SEL ausgelöste Umschaltvorgang kann insbesondere durch Fehlerhaftigkeit oder vollständigen Ausfall eines gegenwärtigen Systemtaktgebers (clock) oder willkürlich durch entsprechende Eingabe, beispielsweise durch einen Benutzer, veranlasst sein, was dem Fachmann bekannt ist.

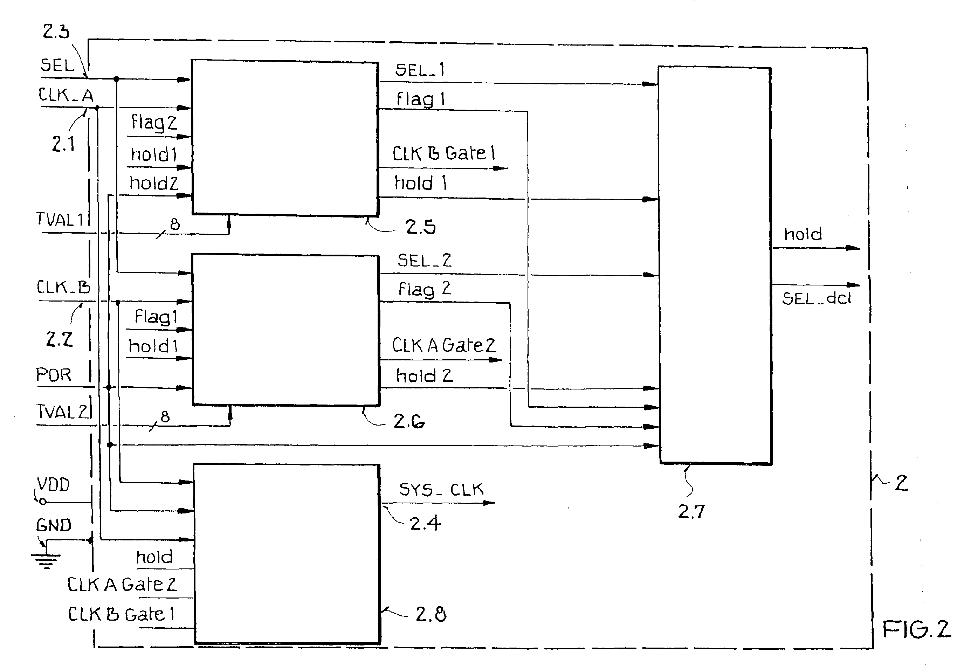

Fig. 2 zeigt anhand eines detaillierteren Blockschaltbilds eine erfindungsgemäße Ausgestaltung der Taktsynchronisierungsvorrichtung 2 gemäß Fig. 1. Gleiche bzw. gleich wirkende Elemente sind dabei mit denselben Bezugszeichen wie in Fig. 1 versehen.

Die Taktsynchronisierungsvorrichtung 2 besitzt gemäß Fig. 2 zwei strukturell identisch ausgebildete Steuermodule, nämlich ein erstes Steuermodul (Synchronisierer) 2.5 und ein zweites Steuermodul (Synchronisierer) 2.6. Darüber hinaus weist die Taktsynchronisierungsvorrichtung 2 noch zwei weitere Schaltungselemente in Form eines Prozessmultiplexers (Synchronisierungszustand-Dekodierer) 2.7 und eines logischen Verknüpfungselements (Takt-Gatter) 2.8 auf, wobei letzteres vorliegend als OR-Gatter ausgebildet ist.

Das erste Steuermodul 2.5 ist mit Eingang 2.1 der Taktsynchronisierungsvorrichtung 2 verbunden, sodass an ihm das erste Taktsignal CLK_A anliegt. Das zweite Steuermodul 2.6 ist mit dem Eingang 2.2 der Taktsynchronisierungsvorrichtung 2 verbunden, sodass an ihm das zweite Taktsignal CLK_B anliegt. Das Umschaltsignal bzw. Auswahl-Steuersignal SEL liegt sowohl an dem ersten Steuermodul 2.5 als auch an dem zweiten Steuermodul 2.6 an. Beide Steuermodule 2.5, 2.6 besitzen darüber hinaus einen Eingang für das Reset-Signal POR. Bei dem gezeigten Ausführungsbeispiel ist zudem für jedes Steuermodul ein Zählerelement TVAL1 beziehungsweise TVAL2, das heißt ein entsprechendes Zeitintervall vorgebbar (vergleiche Fig. 1), worauf später noch genauer eingegangen wird.

Gemäß der Darstellung in Fig. 2 ist das Steuermodul 2.5 zum Ausgeben eines Taktumschaltungs-Sperrsignals flag1 ausgebildet; entsprechend ist das Steuermodul zum Ausgeben eines Taktumschaltungs-Sperrsignals flag2 ausgebildet. Weiterhin sind die Steuermodul 2.5, 2.6 jeweils zum Ausgeben eines Gattersignals ClkBGate1 bzw. ClkAGate2 ausgebildet. Weiterhin sind die Steuermodule 2.5, 2.6 jeweils zum Ausgeben eines Takt-Haltesignals hold1 bzw. hold2 und zum Ausgeben eines ersten beziehungsweise eines zweiten Auswahlsignals SEL_1 beziehungsweise SEL_2 ausgebildet.

Die meisten der vorstehend aufgeführten Ausgabesignale, das heißt die Ausgabesignale SEL_1, SEL_2, hold1, hold2, flag1, flag2 der ersten und zweiten Steuermodule 2.5, 2.6 liegen an entsprechenden Eingängen des Prozessmultiplexers 2.7 an, wie in Fig. 2 dargestellt. Darüber hinaus liegt das Taktumschaltungs-Sperrsignal flag1 des ersten Steuermoduls 2.5 sowie das Takt-Haltesignal hold des ersten Steuermoduls 2.5 an entsprechenden weiteren Eingängen des zweiten Steuermoduls 2.6 an, wie ebenfalls in Fig. 2 dargestellt. Entsprechend liegen das Taktumschaltungs-Sperrsignal flag2 und das Takt-Haltesignal hold2 des zweiten Steuermoduls 2.6 an entsprechenden weiteren Eingängen des ersten Steuermoduls 2.5 an, sodass die Steuermodule 2.5, 2.6 miteinander gekoppelt sind.

Die Ausgabesignale ClkBGate1 und ClkAGate2 liegen an dem Takt-Gatter 2.8 an.

Der Prozessmultiplexer 2.7 erzeugt aus seinen Eingangssignalen, zu denen weiterhin gemäß Fig. 2 das Reset-Signal POR gehört, als Ausgangssignale ein verzögertes Auswahlsignal SEL_del und ein Haltesignal hold. Erstes bildet zusammen mit dem Reset-Signal POR und den bereits erwähnten Gattersignalen ClkBGate1, ClkAGate2 sowie den ersten und zweiten Taktsignalen CLK-A, CLK_B die Eingangssignale für das OR-Gatter (Takt-Gatter) 2.8, welches daraus an seinem Ausgang bzw. dem Ausgang 2.4 der erfindungsgemäßen Taktsynchronisierungsvorrichtung 2 das Systemtakt-Signal SYS_CLK ausgibt.

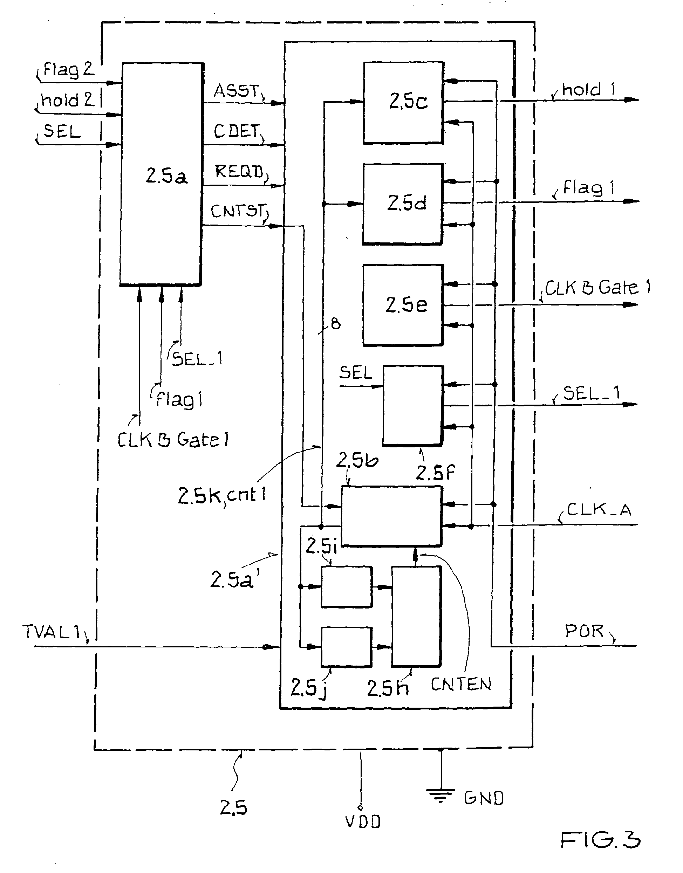

Fig. 3 ist ein detailliertes Blockschaltbild eines ersten Steuermoduls der Taktsynchronisierungsvorrichtung gemäß Fig. 2 und 3 zeigt eine detailliertere Darstellung des ersten Steuermoduls 2.5. Es sei betont, dass das zweite Steuermodul 2.6 strukturell identisch aufgebaut ist, sodass vorliegend auf eine ebenso detaillierte Beschreibung desselben verzichtet werden kann.

Das erste Steuermodul 2.5 und entsprechend das zweite Steuermodul 2.6 (hier nicht gezeigt) beinhaltet einen Steuerblock 2.5a, sowie eine Zustandsmaschine 2.5a', die wiederum einen Zähler 2.5b, eine Haltesignal-Steuereinheit 2.5c, eine Sperrsignal-Steuereinheit 2.5d sowie eine Gatter-Steuereinheit 2.5e, aufweist.

Des Weiteren besitzt die Zustandsmaschine 2.5a' eine Auswahl-Steuereinheit 2.5f sowie eine Zähler-Steuereinheit 2.5h und zwei Vergleicher 2.5i, 2.5j.

An dem Steuerblock 2.5a des ersten Steuermoduls 2.5 liegt das von dem zweiten Steuermodul (nicht gezeigt) erzeugte Taktumschaltungs-Sperrsignal flag2, das ebenfalls von dem zweiten Steuermodul erzeugte Takt- Haltesignal hold2 sowie das Umschaltsignal SEL an. Weiterhin liegen an dem Steuerblock 2.5a das intern, das heißt innerhalb des dargestellten ersten Steuermoduls 2.5 erzeugte Taktumschaltungs-Sperrsignal flag1, das Gattersignal ClkBGate1 sowie das Auswahlsignal SEL_1 an.

Der Steuerblock 2.5 gibt die Steuersignale ASST, CDET, REQD und CNTST aus, auf die später noch detailliert eingegangen wird. Die vorstehend genannten Steuersignale des Steuerblocks 2.5a liegen an der Zustandsmaschine 2.5a' an, wie in Fig. 3 gezeigt.

In der Zustandsmaschine 2.5a' erzeugt der Zähler 2.5b ein Zählersignal beziehungsweise einen Zählerwert cnt1, der über eine Acht-Bit-Leitung 2.5k sowohl an die Haltesignal-Steuereinheit 2.5c und die Sperrsignal-Steuereinheit 2.5d als auch an die Vergleicher 2.5i, 2.5j geliefert wird.

Die Haltesignal-Steuereinheit 2.5c erzeugt das Takt-Haltesignal hold1. Die Sperrsignal-Steuereinheit 2.5d erzeugt das Takt-Umschaltungs-Sperrsignal flag1. Die Gatter-Steuereinheit 2.5e erzeugt das Gattersignal ClkBGate1. Die Auswahl-Steuereinheit 2.5f erzeugt das Auswahlsignal SEL_1. Die Zähler-Steuereinheit 2.5h erzeugt ein Zähler-Freigabesignal CNTEN.

Des Weiteren liegt an allen Steuereinheiten 2.5c-2.5f mit Ausnahme der Zähler-Steuereinheit 2.5h sowie an dem Zähler 2.5b sowohl das erste Taktsignal CLK_A als auch das Reset-Signal POR an.

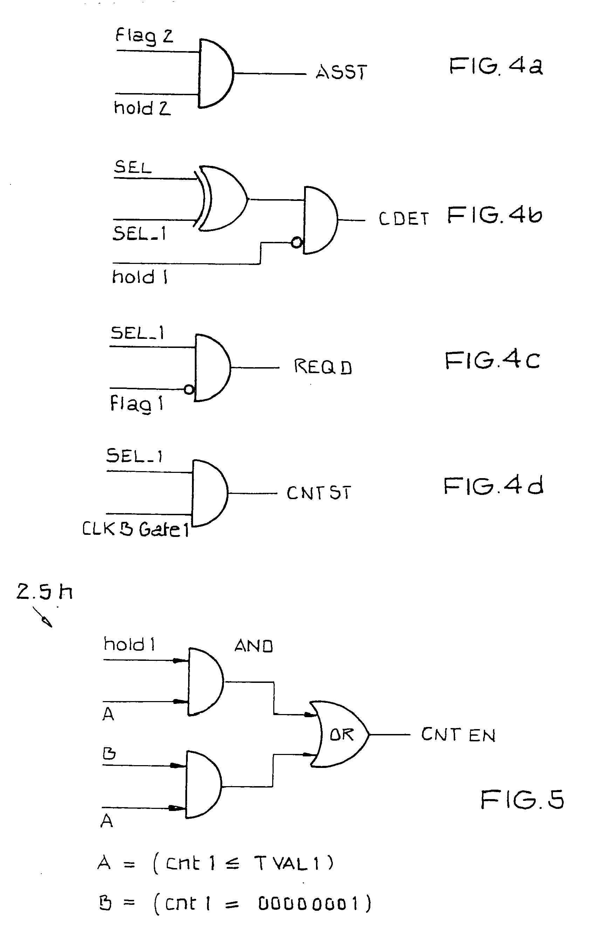

Die Vergleicher 2.5i, 2.5j stehen mit der Zähler-Steuereinheit 2.5h in signaltechnischer Wirkverbindung. Darüber hinaus liegt an der Auswahl-Steuereinheit 2.5f das Umschaltsignal SEL sowie das Auswahlsignal SEL_1 an. Fig. 4a-d zeigen logische Schaltdiagramme zur Darstellung der Erzeugung von Steuersignalen in einem Steuerblock gemäß Fig. 3.

Gemäß Fig. 4a sind die Signale flag2 und hold2 zur Erzeugung des Steuersignals ASST mittels eines logischen UND-Glieds verknüpft, das heißt, das Steuersignal ASST besitzt den Wert "1" (hoher Logikpegel), wenn sowohl das Taktumschaltungs-Sperrsignal flag2 als auch das Takt-Haltesignal hold2 einen hohen Logikpegel hat.

Gemäß Fig. 4b wird das Steuersignal CDET erzeugt, indem das Takt- Haltesignal hold1 in invertierter Form über ein logisches UND-Glied mit dem Ausgang eines exklusiven ODER-Glieds verknüpft wird, wobei an den Eingängen des exklusiven ODER-Glieds das Auswahlsignal SEL beziehungsweise das Auswahlsignal SEL_1 anliegen. Auf diese Weise besitzt das Steuersignal CDET einen hohen Logikpegel, wenn entweder das Auswahlsignal SEL oder das Auswahlsignal SEL_1 einen hohen Logikpegel besitzt und sogleich das Takt-Haltesignal hold1 einen niedrigen Logikpegel hat.

Gemäß Fig. 4c wird das Steuersignal REQD erzeugt, indem das Auswahlsignal SEL_1 über ein logisches UND-Glied mit dem invertierten Taktumschaltungs-Sperrsignal flag1 verknüpft wird. Auf diese Weise hat das Steuersignal REQD einen hohen Logikpegel, wenn das Auswahlsignal SEL_1 einen hohen Logikpegel und das Taktumschaltungs-Sperrsignal flag1 einen niedrigen Logikpegel hat.

Gemäß Fig. 4d wird das Steuersignal CNTST durch eine logische UND-Verknüpfung des Auswahlsignals SEL_1 und des Gattersignals ClkBGate1 erzeugt. Auf diese Weise hat das Steuersignal CNTST einen hohen Logikpegel, wenn sowohl das Auswahlsignal SEL_1 als auch das Gattersignal ClkBGate1 einen hohen Logikpegel besitzen.

Die Logikschaltungen der Fig. 4a-d ergeben zusammen den Steuerblock 2.5a gemäß Fig. 3.

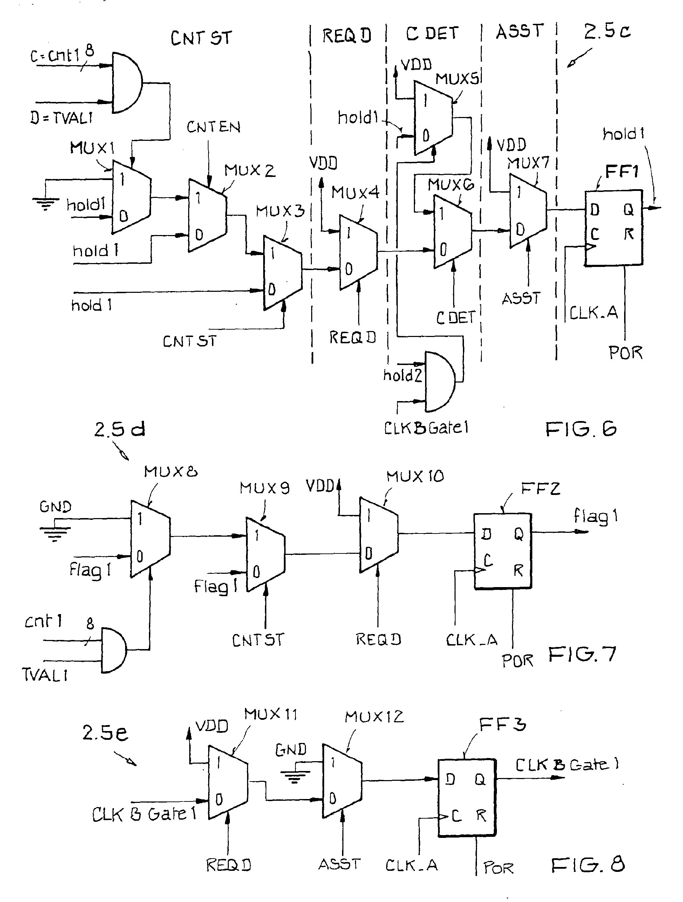

Fig. 5 zeigt detailliert eine logische Schaltungsanordnung der Zähler-Steuereinheit 2.5h in Fig. 2. Gemäß Fig. 5 wird das Zähler-Freigabesignal CNTEN erzeugt, indem zunächst das Takt-Haltesignal hold1 mit einem Signal A logisch UND-verknüpft wird. Dabei stellt das Signal A eine Ausgabe des Vergleichers 2.5i dar, der den Zählerwert cnt1 des Zählers 2.5b mit dem vorgegebenen Endwert TVAL1 (vergleiche Fig. 1, 2) vergleicht und einen hohen Logikpegel ausgibt, wenn gilt: $cnt1 \leq TVAL1$. Weiterhin wird das Signal A mit einem weiteren Signal B logisch UND-verknüpft, wobei das Signal B einen hohen Logikpegel besitzt, wenn gilt: cnt1 = "00000001". Die Ergebnisse der vorstehend erläuterten logischen UND-Verknüpfungen in Fig. 5 werden anschließend logisch ODER-verknüpft, sodass das Zähler-Freigabesignal CNTEN einen hohen Logikpegel besitzt, wenn entweder die UND-Verknüpfung der Signale hold1 und A oder die UND-Verknüpfung der Signale A und B einen hohen Logikpegel ergibt.

Die zu den Fig. 4a-d und 5 gebrachten Ausführungen gelten entsprechend für das zweite Sperrmodul 2.6 (Fig. 1, 2) wenn die jeweiligen Signale, insbesondere Signale hold 1, flag1, hold2, flag2, cnt1, TVAL1, SEL_1 und ClkBGate1 durch die entsprechenden Signale für das zweite Steuermodul 2.6 ersetzt werden (vergleiche Fig. 2).

Fig. 6 zeigt detailliert einen Schaltungsaufbau zum Erzeugen eines Takt-Haltesignals. Dargestellt ist insbesondere ein Schaltungsaufbau der Halte-signal-Steuereinheit 2.5c (Fig. 3). Die in Fig. 6 dargestellte Schaltungsanordnung ist im Wesentlichen aus einer Abfolge von 2-zu-1-Multiplexern MUX1-MUX7 gebildet. Diese fungieren als Wechselschalter, die nach Maßgabe eines jeweils angelegten Steuer- oder Adresssignals zwischen ihren beiden jeweiligen Eingängen umschalten. Dabei wird je nach Logikpegel des Adresssignals entweder das am den mit "0" bezeichneten Eingang des Multiplexers anliegende Signal (niedriger Logikpegel des Adresssignals) oder das an dem mit "1" bezeichneten Eingang des Multiplexers anliegende Signal (hoher Logikpegel des Adresssignals) ausgegeben. Im Folgenden wird der "0" bezeichnete Eingang der Multiplexer MUXi auch mit E0 und der mit "1" bezeichnete jeweilige Eingang der Multiplexer MUXi mit E1 bezeichnet.

An dem ersten Multiplexer MUX1 liegt bei E0 das Takt-Haltesignal hold1 an, während E1 auf Massepotential GND liegt. Das Adresssignal für MUX1 wird durch eine logische UND-Verknüpfung von Signalen C, D erzeugt, wobei C den Zählerwert cnt1 und D den eingestellten Zählerendwert TVAL1 bezeichnen. Der Ausgang des Multiplexers MUX1 ist mit dem Eingang E1 des Multiplexers MUX2 verbunden. Am Eingang E0 des Multiplexers MUX2 liegt wiederum das Takt-Haltesignal hold1 an. Das Adresssignal für den Multiplexer MUX2 wird durch das Steuersignal CNTEN (vergleiche Fig. 3, 5) gebildet. Der Ausgang des Multiplexers MUX2 ist mit dem Eingang E1 des Multiplexers MUX3 verbunden, während an dem Eingang E0 des Multiplexers MUX3 wiederum das Takt-Haltesignal hold 1 anliegt. Das Adresssignal für den Multiplexer MUX3 wird durch das Steuersignal CNTST (vergleiche Fig. 3, 4d) gebildet. Der Ausgang des Multiplexers MUX3 ist mit dem Eingang E0 des Multiplexers MUX4 verbunden, an dessen Eingang E1 das Spannungsversorgungs-Signal VDD anliegt. Das Adresssignal für den Multiplexer MUX4 wird durch das Steuersignal REQD (vergleiche Fig. 3, 4c) gebildet. Der Ausgang des Multiplexers MUX4 ist mit dem Eingang E0 des Multiplexers MUX6 verbunden. Der Eingang E1 des Multiplexers MUX6 ist mit dem Ausgang des Multiplexers MUX5 verbunden, an dessen Eingang E0 das Takt-Haltesignal hold1 und an dessen Eingang E1 wiederum das Spannungsversorgungs-Signal VDD anliegt. Das Adresssignal für den Multiplexer MUX5 wird gebildet durch eine logische UND-Verknüpfung des invertierten Takt-Haltesignals hold2 (vergleiche Fig. 2) und des invertierten Gattersignals ClkBGate1 (vergleiche Fig. 2, 3).

Das Adresssignal für den Multiplexer MUX6 wird durch das Steuersignal CDET (vergleiche Fig. 3, 4b) gebildet. Der Ausgang des Multiplexers MUX6 ist mit dem Eingang E0 des Multiplexers MUX7 verbunden, an dessen Eingang E1 das Spannungsversorungs-Signal VDD anliegt. Das Adresssignal für den Multiplexer MUX7 wird durch das Steuersignal ASST (vergleiche Figur 3, 4a) gebildet. Der Ausgang des Multiplexers MUX7 ist mit dem Dateneingang D eines Flip-Flops FF1 verbunden. Das Flip-Flop FF1 ist als taktgesteuertes oder getaktetes Flip-Flop realisiert. An dessen Takteingang C liegt das erste Taktsignal CLK_A an. Der Rücksetzeingang R des Flip-Flops FF1 ist mit dem Reset-Signal POR verbunden. An dem Ausgang Q gibt das Flip-Flop FF1 das Takt-Haltesignal hold1 aus.

Fig. 7 zeigt detailliert eine Schaltungsanordnung zum Erzeugen eines Taktumschaltungs-Sperrsignals. Die in Fig. 7 gezeigte Schaltungsanordnung übernimmt die Funktion der Sperrsignal-Steuereinheit 2.5d in Fig. 3. Sie besteht aus einer Abfrage von 2-zu-1-Multiplexern MUX8-MUX10, die als Wechselschalter fungieren und jeweils Eingänge E0, E1, einen Adress- oder Steuereingang sowie einen Ausgang aufweisen. Am Eingang E0 des Multiplexers MUX8 liegt das Taktumschaltungs-Sperrsignal flag1 an, während Eingang E1 auf Massepotential GND liegt. Das Adresssignal für den Multiplexer MUX8 wird durch eine logische UND-Verknüpfung der Signale cnt1 und TVAL1 gebildet (vergleiche Fig. 6). Der Ausgang des Multiplexers MUX8 ist mit dem Eingang E1 des Multiplexers MUX9 verbunden, an dessen Eingang E0 wiederum das Taktumschaltungs-Sperrsignal flag1 anliegt. Das Adresssignal für den Multiplexer MUX9 wird durch das Steuersignal CNTST (vergleiche Fig. 3, 4d) gebildet. Der Ausgang des Multiplexers MUX9 ist mit dem Eingang E0 des Multiplexers MUX10 verbunden, an dessen Eingang E1 das Spannungsversorgungs-Signal VDD anliegt. Das Adresssignal für den Multiplexer MUX10 wird durch das Steuersignal REQD (Fig. 3, 4c) gebildet. Der Ausgang des Multiplexers MUX10 ist mit dem Dateneingang D eines Flip-Flops FF2 verbunden, an dessen Takteingang des Taktsignal CLK_A anliegt. An dem Rücksetzeingang R des Flip-Flops FF2 liegt das Reset-Signal POR an, während am Ausgang Q des Flip-Flops FF2 das Taktumschaltungs-Sperrsignal flag1 ausgegeben wird.

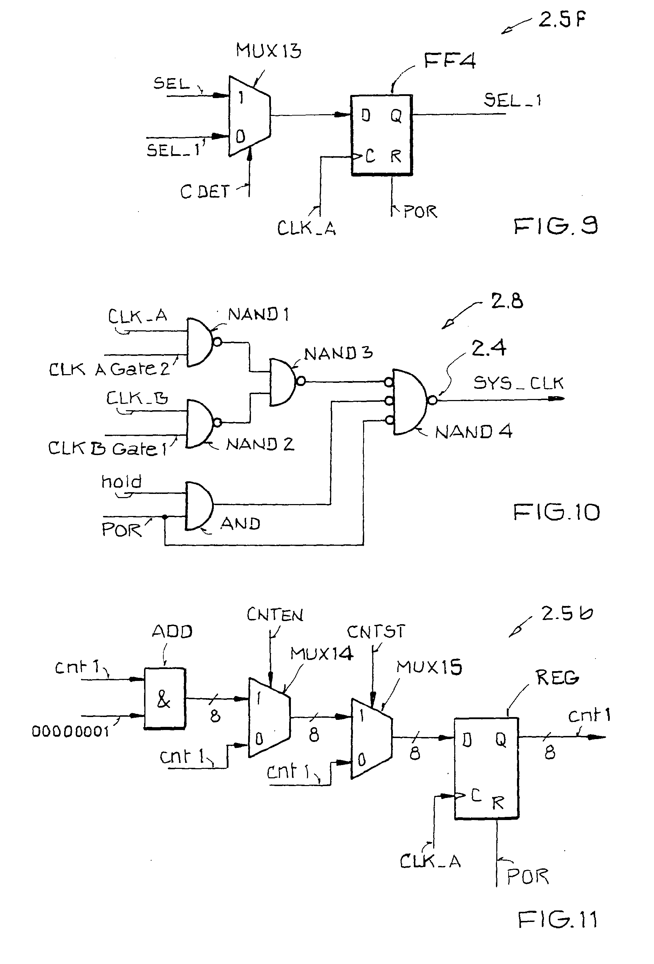

Fig. 8 zeigt detailliert eine Schaltungsanordnung zum Erzeugen eines Gattersignals. Die Schaltungsanordnung gemäß Fig. 8 entspricht der Gatter-Steuereinheit 2.5e in Fig. 3. Sie ist im Wesentlichen aus einer Abfolge von 2-zu-1-Multiplexern (Wechselschaltern) MUX11, MUX12 gebildet. Am Eingang E0 des Multiplexers MUX12 liegt das Gattersignal ClkBGate1 an, während an dem Eingang E1 des Multiplexers MUX11 das Spannungsversorgungs-Signal VDD anliegt. Der Ausgang des Multiplexers MUX11 ist mit dem Eingang E0 des Multiplexers MUX12 verbunden, dessen Eingang E1 auf Massepotential GND liegt. Das Adresssignal für den Multiplexer MUX12 wird durch das Steuersignal ASST (Fig. 3, 4a) gebildet, während das Adresssignal für den Multiplexer MUX11 durch das Steuersignal REQD (Fig. 3, 4c) gebildet ist.

Der Ausgang des Multiplexers MUX12 ist mit dem Dateneingang D eines Flip-Flops FF3 verbunden, an dessen Takteingang C das Taktsignal CLK_A anliegt. An dem Rücksetzeingang R des Flip-Flops FF3 liegt das Reset-Signal POR an. An einem Ausgang Q gibt das Flip-Flop FF3 das Gattersignal ClkBGate1 aus.

Fig. 9 zeigt detailliert eine Schaltungsanordnung zum Erzeugen eines ersten Auswahlsignals. Die Schaltungsanordnung gemäß Fig. 9 entspricht der Auswahlsignal-Steuereinheit 2.5f in Fig. 3. Sie weist einen 2-zu-1-Multiplexer MUX13 und ein Flip-Flop FF4 auf. An dem Eingang E0 des Multiplexers MUX13 liegt das Auswahlsignal SEL_1 an, während an dem Eingang E1 des Multiplexers MUX13 das Auswahlsignal-Steuer-/Umschaltsignal SEL anliegt. Das Adresssignal für den Multiplexer MUX13 wird durch das Steuersignal CDET (Fig. 3, 4b) gebildet. Der Ausgang des Multiplexers MUX13 ist mit dem Dateneingang D des Flip-Flops FF4 verbunden, an dessen Takteingang C das Taktsignal CLK_A anliegt. An dem Rücksetzeingang R des Flip-Flops FF4 liegt das Reset-Signal POR an. An seinem Ausgang Q gibt das Flip-Flop FF4 das Auswahlsignal SEL_1 aus.

Fig. 10 zeigt detailliert eine logische Schaltungsanordnung des Taktgatters 2.8 gemäß Fig. 2. Sie ist gebildet aus einer Anzahl von NAND-Gattern NAND1-NAND4 sowie einem UND- beziehungsweise AND-Gatter AND. An die beiden Anschlüssen des NAND-Gatters NAND1 liegen das erste Taktsignal CLK_A sowie das von dem zweiten Steuermodul 2.6 (Fig. 2) erzeugte Gattersignal ClkAGate2 an. Entsprechend verknüpft das zweite NAND-Gatter NAND2 das zweite Taktsignal CLK_B sowie das von dem ersten Steuermodul 2.5 (Fig. 2) erzeugte Gattersignal ClkBGate1. Die Ausgänge der NAND-Gatter NAND1, NAND2 sind mit den Eingängen des NAND-Gatters NAND3 verknüpft. An den Eingängen des AND-Gatters AND liegen das globale Takt-Haltesignal hold sowie das invertierte Reset-Signal POR. Das vierte NAND-Gatter NAND4 weist drei invertierende Eingänge auf, an denen das Ausgangssignal des NAND-Gatters NAND3, des Ausgangssingals AND-Gatters AND sowie das Reset-Signal POR anliegen. Das NAND-Gatter NAND4 liefert an seinem Ausgang das System-Taktsignal SYS_CLK, wobei der Ausgang des NAND-Gatters NAND4 zugleich den Ausgang 2.4 (Fig. 2) der erfindungsgemäßen Taktsynchronisierungsvorrichtung 2 bildet.

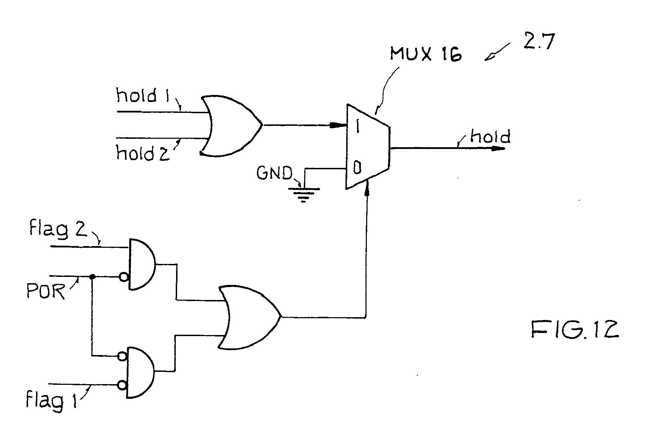

Fig. 11 zeigt detailliert eine Schaltungsanordnung zum Erzeugen eines Zählersignals. Die Schaltungsanordnung gemäß Fig. 11 entspricht dem Zähler 2.5b gemäß Fig. 3. Sie ist gebildet aus einem Addierer ADD, zwei 2-zu-1-Multiplexern (Wechselschaltern) MUX14, MUX15 und einem 8-Bit-Register REG. Der Eingang E1 des Multiplexers MUX14 ist mit dem Addierer ADD verbunden. Dieser ist zum Addieren von Signalen cnt1 und "00000001" ausgebildet, die an den entsprechenden Eingängen des Addierers ADD anliegen. Dabei stellt das Signal cnt1 einen gegenwärtigen Zählerwert des Zählers 2.5b dar, während das Signal "0000001" das Zählerinkrement (Inkrementeinheit 1 Bit) darstellt. An dem Eingang E0 des Multiplexers MUX14 liegt ebenfalls das Zählersignal cnt1 an. Das Adresssignal für den Multiplexer MUX14 wird durch das Steuersignal CNTEN (vergleiche Fig. 3, 5) gebildet. Der Ausgang des Multiplexers MUX14 ist mit dem Eingang E1 des Multiplexers MUX15 verbunden, an dessen Eingang E0 das Zählersignal cnt1 anliegt. Das Adresssignal für den Multiplexer MUX15 wird durch das Steuersignal CNTST (vergleiche Fig. 3, 4d) gebildet. Der Ausgang des Multiplexers MUX15 ist über eine 8-Bit-Leitung mit entsprechenden Dateneingängen des Registers REG verbunden, an dessen Takteingang C das Taktsignal CLK_A anliegt. An dem Rücksetzeingang R des Registers REG liegt das Reset-Signal POR an. Das Register REG gibt-wiederum über eine 8-Bit-Leitung - das Zählersignal cnt1 aus.

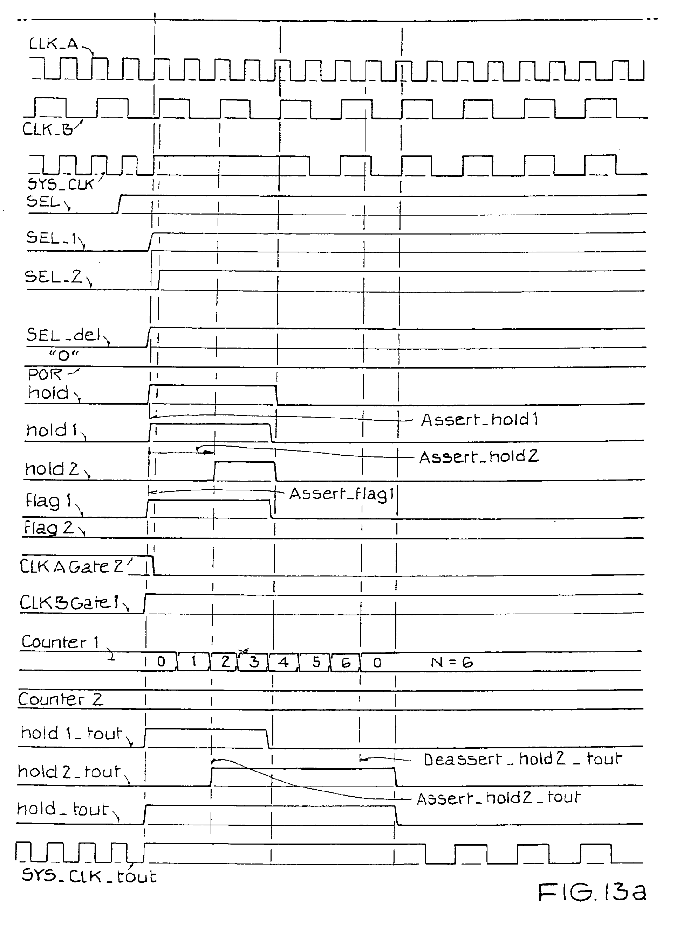

Gemäß Fig. 2 gibt der Prozess-Multiplexer 2.7 der erfindungsgemäßen Taktsynchronisierungsvorrichtung 2 das (globale) Takt-Haltesignal hold aus. Eine entsprechende Schaltungsanordnung ist in Fig. 12 dargestellt.

Fig. 12 zeigt detailliert eine Schaltungsanordnung zum Erzeugen eines globalen Takt-Haltesignals. Die Schaltungsanordnung gemäß Fig. 12 entspricht dem Prozessor-Multiplexer 2.7 gemäß Fig. 2. Sie ist gebildet aus einer Anzahl von logischen UND/ODER-Verknüpfungen sowie einem "2-zu-1 "-Multiplexer (Wechselschalter) MUX16. Das Signal am Eingang E1 des Multiplexers MUX16 wird durch eine logische ODER-Verknüpfung der ersten und zweiten Takt-Haltesignale hold1 und hold2 gebildet. Der Eingang E0 des Multiplexers MUX16 liegt auf Massepotential GND. Das Steuersignal für den Multiplexer MUX16 wird durch logische Verknüpfungen der ersten und zweiten Taktumschaltungs-Sperrsignale flag1 und flag2 und des Reset-Signals POR gebildet. Dazu werden das erste Taktumschaltungs-Sperrsignal flag1 und das Reset-Signal POR sowie das zweite Taktumschaltungs-Sperrsignal flag2 und das Reset-Signal POR jeweils invertiert und paarweise logisch UND-verknüpft, wie in Fig. 12 dargestellt. Das bedeutet, es erfolgt sowohl eine logische UND-Verknüpfung des invertierten ersten Taktumschaltungs-Sperrsignals flag1 und des invertierten Reset-Signals POR als auch eine logische UND-Verknüpfung des invertierten zweiten Taktumschaltungs-Sperrsignals flag2 und des invertierten Reset-Signals POR. Die Ergebnisse dieser beiden logischen UND-Verknüpfungen werden in Form einer logischen ODER-Verknüpfung erneut verknüpft, wobei das Ergebnis dieser ODER-Verknüpfung das Adresssignal für den Multiplexer MUX16 bildet. Dieser gibt über seinen Ausgang das globale Takt- Haltesignal hold aus.

Die den Schaltungsanordnungen der Fig. 4a bis 12 jeweils entsprechenden Schaltungsanordnungen für das (im Wesentlichen identische) zweite Steuermodul 2.6 ergeben sich in für den Fachmann offensichtlicher Weise durch einfaches Austauschen beziehungsweise Ersetzen der angegebenen (Steuer-)Signale durch die entsprechenden Signale des zweiten Steuermoduls, wie beispielsweise aus Fig. 2 ersichtlich. Auf eine detaillierte Beschreibung der in dem zweiten Steuermodul 2.6 enthaltenen Schaltungsanordnungen kann daher vorliegend verzichtet werden. Es sei hier nur angemerkt, dass in dem ersten Steuermodul 2.5 das Steuersignal ClkBGate1 für POR=1 zurückgesetzt wird, während in dem zweiten Steuermodul 2.6 das Steuersignal ClkAGate2 für POR=1 gesetzt wird.

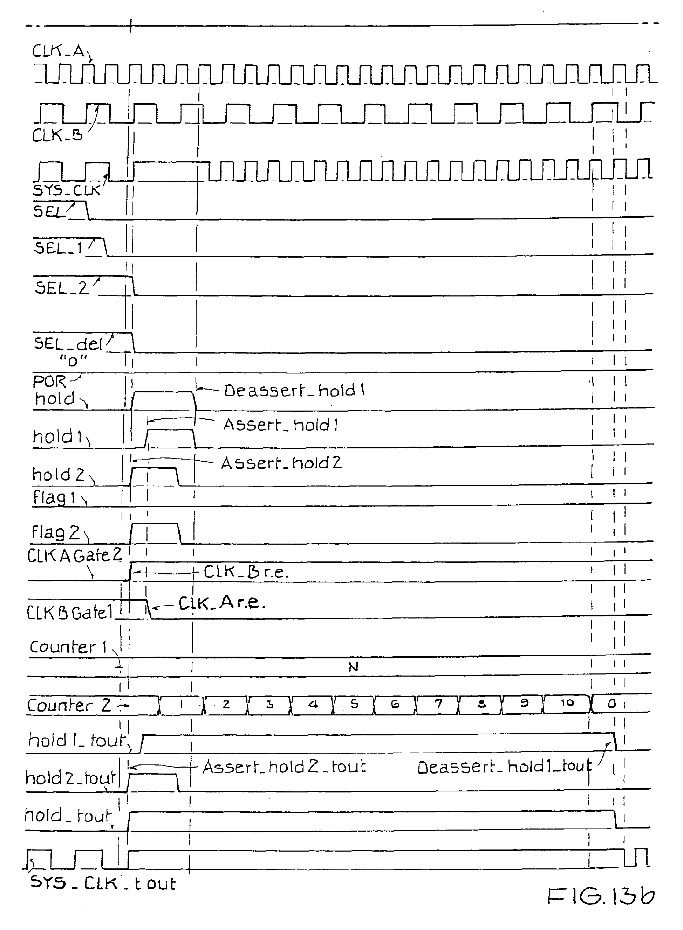

Der Betrieb der erfindungsgemäßen Taktsynchronisierungsvorrichtung 2 gemäß Fig. 2 bis 12 wird nun anhand des Zeitablauf-Diagramms in Fig. 13a, b näher erläutert:

Fig. 13a, b zeigen gemeinsam ein Zeitablauf-Diagramm zur Darstellung des Signalflusses bei einer erfindungsgemäßen Taktsynchronisierungsvorrichtung 2 (Fig. 2-12). Erfindungsgemäß weisen die beiden strukturell identisch ausgebildeten Steuermodule 2.5, 2.6 der erfindungsgemäßen Taktsynchronisierungsvorrichtung 2 im Betrieb eine Master-Slave-Abhängigkeit auf, wobei immer dasjenige Steuermodul als Master fungiert, dessen Taktsignal CLK_A, CLK_B zu einem gegebenen Betrachtungszeitpunkt, beispielsweise als Default-Einstellung nach einem Reset (POR), als Systemtakt-Signal SYS_CLK an dem Ausgang 2.4 der Taktsynchronisierungsvorrichtung 2 bereitgestellt wird.

Bei allen in Fig. 13a, b dargestellten Signalen bzw. Signalverläufen handelt es sich um digitale Signale, die jeweils zwischen einem logischen LOW-Pegel ("0") und einem logischen HIGH-Pegel ("1") umschaltbar sind, sodass die gesamte Schaltungsanordnung 1 (Fig. 1) als vollständig digitale Schaltungsanordnung realisierbar ist, was sich insbesondere überhaus vorteilhaft auf eine Synthesefähigkeit mittels herkömmlicher Synthesewerkzeuge auswirkt.

Im Folgenden ist der Fall beschrieben, in dem zunächst - standardmäßig nach erfolgtem Reset POR - das erste Taktsignal CLK_A als Systemtakt fungiert, sodass das erste Steuermodul 2.5 zunächst Master und das zweite Steuermodul 2.6 zunächst Slave ist. Bei einer solchen Konstellation kann das Umschaltsignal bzw. Auswahl-Steuersignal SEL speziell durch an den Übergang von logisch LOW, das heißt einem niedrigen Logikpegel, zum Beispiel auf Niveau des Massepotentials GND, nach logisch HIGH, das heißt einem hohen Logikpegel, zum Beispiel auf Niveau der Versorgungsspannung VDD (Übergang "01"), einen Umschaltvorgang zum Umschalten des Systemtaktes von dem ersten Taktsignal CLK_A auf das zweite Taktsignal CLK_B auslösen. Dies ist in Fig. 3 entsprechend in der mit SEL bezeichneten Diagrammzeile dargestellt.

Wie ebenfalls aus Fig. 13a ersichtlich ist, wird vor diesem Auslösezeitpunkt zunächst das erste Taktsignal CLK_A standardmäßig als Systemtakt-Signal SYS_CLK nach einem anfänglichen Reset ausgegeben, wobei bei anliegendem Reset-Signal (POR=HIGH) ein konstantes HIGH-Pegel-Signal am Ausgang 2.4 (Fig. 2) ausgegeben wird. Dementsprechend gibt das OR-Gatter 2.8 (Fig. 2) immer dann ein (zeitlich aufgelöstes) HIGH-Pegel-Signal über den Ausgang 2.4 aus, wenn an mindestens einem seiner Eingänge ein entsprechendes (HIGH-Pegel-) Signal anliegt, was dem Fachmann geläufig ist.

Gemäß Fig. 9 (in Verbindung mit Fig. 4b) erzeugt der Prozessmultiplexer 2.7 (Fig. 2) aus dem eigentlichen Umschaltsignal SEL ein gemäß dem Takt CLK_A verzögertes Umschaltsignal SEL_del, das gemäß Fig. 13 für die weitere Taktumschaltung maßgeblich ist. Nachfolgend wird jedoch aus Gründen der Übersichtlichkeit keine Unterscheidung zwischen den Signalen SEL und SEL_del gemacht.

Nachdem durch das Umschaltsignal bzw. Auswahl-Steuersignal SEL durch den bereits beschriebenen Übergang "01" ein Umschalten des Systemtakts von dem ersten Taktsignal CLK_A zu dem zweiten Taktsignal CLK_B ausgelöst bzw. eingeleitet wurde, erzeugt die Sperrsignal-Steuereinheit 2.5d (Fig. 7) des Master-Steuermoduls 2.5 das Sperrsignal flag1, d. h. schaltet dieses von einem standardmäßigen logischen LOW-Pegel auf einen logischen HIGH-Pegel um, wie aus der entsprechend bezeichneten Diagrammzeile in Fig. 2 ersichtlich ist ("Assert_flag1"). Zugleich erzeugt die Haltesignal-Steuereinheit 2.5c des Master-Steuermoduls 2.5 nach Maßgabe der weiteren in Fig. 6 angegebenen (Steuer-) Signale das Takt-Haltesignal hold1, d. h. schaltet dieses von einem logischen LOW-Pegel auf einen logischen HIGH-Pegel um, wie ebenfalls aus der entsprechend bezeichneten Diagrammzeile in Fig. 13a erkennbar ist (,,Assert_hold1"). Dabei erfolgt das Umschalten vorliegend immer bei einer steigenden Flanke (rising edge - r.e.) des ersten Taktsignal CLK_A.

Kurz nach den vorstehend beschriebenen Vorgängen wird optional der Zähler 2.5b des Master-Steuermoduls 2.5 gestartet, der - nach Maßgabe des für das erste Steuermodul 2.5 maßgeblichen ersten Taktsignals CLK_A - bis zu einem vorgegebenen bzw. durch einen Benutzer softwaretechnisch vorgebbaren Endwert N beziehungsweise einem entsprechenden Zeitwert TVAL1 (Fig. 2) zählt, wobei dieser Endwert N (hier N=6) derart gewählt ist, dass die ihm zugeordnete Zeit $T_c$ (gemessen in Perioden des ersten Taktsignals CLK_A) gilt:

$$T_c = 2 \cdot T_p + T_s ,$$

wobei $T_p$ eine Periodendauer des ersten Taktsignals CLK_A und $T_s$ eine Periodendauer des zweiten Taktsignals CLK_B (Primär- bzw. Sekundär-Taktsignal) bezeichnet. Daraus folgt weiterhin:

$$N = 2 + \lfloor T_s / T_p \rfloor - 1$$

für den Minimalwert für TVAL1 (Fig. 2), wobei der Summand „- 1" ausdrückt, dass ein Taktzyklus von CLK_A erforderlich ist, um bis „1" zu zählen.

Nachfolgend werden zur Unterscheidung bei Verwendung des Zählers 2.5b erzeugte Signale (Takt-Haltesignale, Systemtakt-Signal) mit der Erweiterung "_ tout" bezeichnet.

Weiterhin wird in jedem Fall durch die Gatter-Steuereinheit 2.5e des Master-Steuermoduls 2.5 ein Gatter-Steuersignal ClkBGate1 auf logisch HIGH gesetzt (vergleiche Fig. 8).

Da das zweite Steuermodul 2.6 (Fig. 2) als Slave-Modul fungiert, bleiben die dort erzeugten, entsprechenden Signale hold2, flag2 zunächst auf logisch LOW, und der Zähler 2.6b wird in jedem Fall nicht gestartet. Des Weiteren wird das Gatter-Steuersignal ClkAGate2 durch die Gate-Steuereinheit 2.6e des Slave-Steuermoduls 2.6 auf einem logischen LOW-Pegel ausgegeben.

Die vorstehend erläuterten Taktumschaltungs-Sperrsignale flag1, flag2 und Takt-Haltesignale hold1, hold2 beziehungsweise hold1_tout, hold2_tout werden an den Prozessmultiplexer 2.7 (Fig. 12) weitergeleitet, der bestimmte logische Verknüpfungen der genannten Eingangssignale vornimmt und insbesondere das ebenfalls in Fig. 2, 12 gezeigte globale Halte-Signal hold ausgibt.

Dabei wird insbesondere aus dem ersten Takt-Haltesignal hold 1 (hold 1_tout) und dem zweiten Takt-Haltesignal hold2 (hold2_tout) im Sinne einer logischen ODER-Verknüpfung (OR) das globale Takt-Haltesignal hold (hold_tout) gebildet. Mit anderen Worten: Das globale Takt-Haltesignal hold weist einen logischen HIGH-Pegel auf, wenn wenigstens eines der ersten und zweiten Takt-Haltesignale hold1, hold2 einen logischen HIGH-Pegel besitzt, was für die Signale „_tout" entsprechend gilt. Dies ist ebenfalls in Fig. 13a in den entsprechend bezeichneten Diagrammzeilen dargestellt.

Erfindungsgemäß wird - wie bereits erwähnt - zunächst das Takt-Haltesignal hold1 beziehungsweise hold1_tout nach Maßgabe des Master-Steuermoduls 2.5 auf logisch HIGH gesetzt, sobald das Master-Steuermodul 2.5 das Anliegen eines entsprechenden Umschaltsignals bzw. Auswahl-Steuersignals SEL erkennt. Zeitgleich wird erfindungsgemäß auch das globale Takt-Haltesignal hold beziehungsweise hold_tout auf logisch HIGH gesetzt. Wie ebenfalls bereits erwähnt, wird das so erzeugte erste Takt- Haltesignal hold1 (hold1_tout) an die Haltesignal-Steuereinheit 2.6a des Slave-Steuermoduls 2.6 angelegt (vergleiche Fig. 2). Erfindungsgemäß wird dann - mit gewisser zeitlicher Verzögerung gegenüber dem ersten Takt- Haltesignal hold1 - mit der nächsten steigenden Flanke des zweiten TaktSignals CLK_B auch das zweite Takt-Haltesignal hold2 (hold2_tout) durch die Haltesignal-Steuereinheit 2.6a auf logisch HIGH gesetzt, was in Fig. 13a zusätzlich mit "Assert_hold2" beziehungsweise "Assert_hold2_tout" bezeichnet ist. Mit anderen Worten: Der gehaltene Zustand des ersten Taktsignals CLK_A, der sich in einem logischen HIGH-Pegel des ersten Takt-Haltesignals hold1 (hold1_tout) ausdrückt, wird durch das Master-Steuermodul 2.5 an das Slave-Steuermodul 2.6 weitergegeben, was sich in dem angepassten logischen HIGH-Pegel des zweiten Takt-Haltesignals hold2 (hold2_tout) ausdrückt.

Wie ebenfalls bereits anhand von Fig. 2 beschrieben, liegt das durch die Haltesignal-Steuereinheit 2.6a des Slave-Steuermoduls 2.6 erzeugte zweite Takt-Haltesignal hold2 an der Haltesignal-Steuereinheit 2.5c des Master-Steuermoduls 2.5 an. Erkennt dieses bzw. dessen Haltesignal-Steuereinheit 2.5c das Setzen des zweiten Takt-Haltesignals hold2 auf logisch HIGH, wie vorstehend beschrieben, so wird anschließend gemäß Fig. 13a in Verbindung mit Fig. 6 das erste Takt-Haltesignal hold1 zurück auf logisch LOW gesetzt. Auf diese Weise führen die ersten und zweiten Steuermodule 2.5 erfindungsgemäß ein Handshake-Verfahren durch, um sich gegenseitig über die ausgelöste Systemtakt-Umschaltung zu informieren.

Wie ebenfalls aus Fig. 13a zu entnehmen ist, verbleibt während der gesamten Zeit, in der sich das erste Takt-Haltesignal hold1 und/oder das zweite Takt-Haltesignal hold2 auf logisch HIGH befindet, das globale Takt-Haltesignal hold ebenfalls auf logisch HIGH und wird in dieser Form durch den Prozessmultiplexer 2.7 (Fig. 2) ausgegeben, sofern das Reset-Signal POR und wenigstens eines der Taktumschaltungs-Sperrsignale flag1, flag2 einen niedrigen Logikpegel (LOW) hat (vergleiche Fig. 12). Es sei jedoch angemerkt, dass ein Zurücksetzen (Reset, POR=1) der erfindungsgemäßen Taktsynchronisierungsvorrichtung immer zu einem Stoppen oder Halten des Systemtakts führt, d.h. POR=1 ⇒ SYS_CLK=1. Während sich das globale Takt-Halte-signal hold (hold_tout) auf logisch HIGH befindet, ist auch das Systemtakt-Signal SYS_CLK (SYS_CLK_tout) gemäß Fig. 13a auf einem logischen HIGH-Pegel konstant gehalten. Dies ergibt sich aus der bereits erwähnten logischen ODER-Funktionalität (OR) des Schaltungselements 2.8 (Fig. 2).

Mit dem Zurücksetzen des zweiten Takt-Haltesignals hold2 auf einen logischen LOW-Pegel nach Maßgabe einer nächsten steigenden Flanke des zweiten Taktsignals CLK_B erfolgt erfindungsgemäß aufgrund des bereits erfolgten Zurücksetzens des ersten Takt-Haltesignals hold1 auf logisch LOW auch ein entsprechendes Zurücksetzen des globalen Takt-Haltesignals hold, wie in Fig. 13a dargestellt (vergleiche Fig. 12). Nach Maßgabe des Prozessmultiplexers 2.7 (Fig. 12) geschieht dieses Zurücksetzen des globalen Takt-Haltesignals hold jedoch nur, wenn zuvor bereits das von der Sperrsignal-Steuereinheit 2.5d des Master-Steuermoduls 2.5 anfänglich auf logisch HIGH gesetzte Sperrsignal flag1 im Takt des ersten Taktsignals CLK_A wieder auf einen logischen LOW-Pegel zurückgesetzt wurde.

Dies geschieht optional bei Verwendung des Zählers 2.5b des Master-Steuermoduls 2.5, wenn dieser seinen vorgegebenen Endwert N erreicht hat (cnt1=TVAL1) und entsprechend feuert (vergleiche Fig. 7 in Verbindung mit Fig. 11 betreffend des Takt-Haltesignal hold2_tout). Zunächst wird wiederum ein Zurücksetzen des Taktumschaltungs-Sperrsignals flag1 auf logisch LOW durch die Sperrsignal-Steuereinheit 2.5d gemäß Fig. 7 veranlasst. Dieses Zurücksetzen des Taktumschaltungs-Sperrsignals flag1 erfolgt bei einer auf das Setzen des Takt-Haltesignals hold2_tout folgenden steigenden Flanke des ersten Taktsignals CLK_A. Somit kann gemäß Fig. 13a das Slave-Steuermodul 2.6 bzw. dessen Haltesignal-Steuereinheit 2.6c anschließend, d. h. mit einer weiteren (nächsten) steigenden Flanke des zweiten Taktsignals CLK_B nach erfolgter Abfrage des flag1-Eingangs das zweite Takt-Haltesignal hold2_tout auf logisch LOW zurücksetzen, wenn der Zähler 2.5b seinen Endwert N beziehungsweise TVAL1 bereits erreicht hat (sog. "rollover" des Zählers). Dies ist in Fig. 13a mit "Deassert_hold2_tout" bezeichnet und hat -wie bereits erwähnt - umgehend ein entsprechendes Zurücksetzen des globalen Takt-Haltesignals hold_tout durch den Prozessmultiplexer 2.7 (Fig. 12) zur Folge.

Entsprechend kann dann am Ausgang 2.4 der Schaltungsanordnung 2 (Fig. 2) das zweite Taktsignal CLK_B als neues System-Taktsignal SYS_CLK ausgegeben werden. Zwecks einer entsprechenden Ausgabesteuerung können dazu die ersten und zweiten Taktsignale CLK_A, CLK_B vor dem Anlegen an das OR-Gatter 2.8 (Fig. 2) jeweils über eine logische UND-Verknüpfung ("&") mit den von den Steuermodulen 2.5, 2.6 ausgegebenen Gate-Steuersignal ClkBGate1 bzw. ClkAGate2 verknüpft werden, was jedoch in Fig. 2 nicht explizit dargestellt ist. Mit anderen Worten: Die Gate-Steuersignale ClkBGate1, ClkAGate2 bilden eine Art Maske, mit deren Hilfe das Schaltungselement 2.8 das auszugebende System-Taktsignal SYS_CLK auswählt.

Wie ebenfalls Fig. 13a nicht explizit zu entnehmen ist, sorgt auch das Anlegen eines Reset-Signals (POR=HIGH) für die Ausgabe eines konstanten („eingefrorenen") System-Taktsignals auf einen logischen HIGH-Pegel. Eine entsprechende Zeitablauf-Phase bzw. ein entsprechender Zustand (State) ließe sich in Fig. 13a, b analog zu den vorstehend beschriebenen Umschaltphasen "Reset" bezeichnen. An den (nicht gezeigten) Reset-Zustand schließt sich ein sogenannter "Idle"-Zustand an, in dem (noch) keine Taktumschaltung statfindet, sodass defaultmäßig das erste Taktsignal CLK_A als System-Taktsignal SYS_CLK ausgegeben wird.

Danach wird - wie detailliert erläutert - durch den Pegelwechsel des Umschaltsignals bzw. Auswahl-Steuersignals SEL von logisch LOW ("0") auf logisch HIGH ("1") der Umschaltvorgang von dem ersten Taktsignal CLK_A auf das zweite Taktsignal CLK_B ausgelöst.

Nach erfolgtem Umschalten des System-Taktsignals von dem ersten Taktsignal auf das zweite Taktsignal sind nunmehr die Funktionalitäten der ersten und zweiten Steuermodule 2.5, 2.6 (Fig. 2) vertauscht. Mit anderen Worten: Nach erfolgter Umschaltung des System-Taktsignals von dem ersten Taktsignal auf das zweite Taktsignal kommt nunmehr dem zweiten Steuermodul 2.6 die weiter oben eingehend erläuterte Master-Funktion zu, wohingegen dem ersten Steuermodul 2.5, dessen (erstes) Taktsignal CLK_A zur Zeit nicht als System-Taktsignal SYS_CLK ausgegeben wird, nunmehr die Slave-Funktion zukommt.

Entsprechend ist in Fig. 13b analog ein weiterer Umschaltvorgang von dem zweiten Taktsignal CLK_B zurück auf das erste Taktsignal CLK_A dargestellt, bei dem somit das zweite Steuermodul 2.6 als Master-Steuermodul fungiert, während das erste Steuermodul 2.5 die Rolle des Slave-Moduls übernimmt. Der Umschaltvorgang selbst läuft ab, wie weiter oben für den Zustand "CLK_B" detailliert beschrieben, wobei jedoch nunmehr anstelle der maßgeblichen Elemente des ersten Steuermoduls 2.5 die entsprechenden Elemente des zweiten Steuermoduls 2.6 zum Einsatz kommen und umgekehrt. Wegen der Spiegelbildlichkeit des Vorgangs kann somit vorliegend auf eine detaillierte Beschreibung der Rückumschaltung auf das Taktsignal CLK_A verzichtet werden. Ausgelöst wird sie erfindungsgemäß durch ein Umschalten des Auswahl-Steuersignals SEL von logisch HIGH auf logisch LOW ("10"), wie Fig. 13b bei t=4,2 µs zu entnehmen ist.

Der Einsatz des Zählers 2.5b, 2.6b ist - wie betont wurde - ein optionales Merkmal der vorliegend beschriebenen Ausgestaltung der Erfindung, welches beispielsweise durch den Empfang eines hierfür vorgesehenen weiteren Steuersignals durch die erfindungsgemäße Taktsynchronisierungsvorrichtung (nicht explizit dargestellt) ausgelöst wird. Über das Zurücksetzen des entsprechenden Taktumschaltungs-Sperrsignals flag1 bzw. flag2 auf Logisch LOW nach Ablauf des jeweiligen Zählers 2.5b, 2.6b wird erfindungsgemäß die Systemtakt-Umschaltung zeitnah zu einem vorbestimmten Zeitpunkt - nämlich dem Ablauf des betreffenden Zählers - erzwungen. Alternativ zu einer solchen Ausgestaltung ist es jedoch auch möglich, die Systemtakt-Umschaltung eines Zählers unmittelbar nach dem weiter oben detailliert beschriebenen Handshake-Verfahren zu erlauben, was gegebenenfalls zu einer schnelleren Taktumschaltung führen kann.

Nachfolgend wird der Betrieb der erfindungsgemäßen Taktsynchronisierungsvorrichtung 2 (Fig. 2) für den Übergang von dem ersten Taktsignal CLK_A zu dem zweiten Taktsignal CLK_B als System-Taktsignal SYS_CLK nochmals zusammenfassend beschrieben:

a) Das Umschaltungssignal SEL wird von außen angelegt, um eine Systemtaktumschaltung anzufordern. Ein Übergang des Umschaltungssignal SEL von "0" nach "1" dient zur Anforderung einer Umschaltung des Systemtakts von CLK_A nach CLK_B.

b) Der Zustand des SEL-Eingangs-Signals wird in dem Steuermodul 2.5 mittels des ersten Taktsignals CLK_A abgetastet, um das Signal SEL_1 zu erzeugen (vergleiche Fig. 9). Das Signal SEL wird auch in dem zweiten Steuermodul 2.6 mittels des zweiten Taktsignals CLK_B abgetastet, um das Signal SEL_2 zu erzeugen (analog Fig. 9).

c) Eine Veränderung des SEL-Signals (SEL=1) wird bei einer steigenden Flanke des ersten Taktsignals CLK_A abgetastet, wodurch die Signale hold und flag1 jeweils auf einen hohen Logikpegel (hold 1=1, flag1=1) gesetzt werden. Dies führt darüber hinaus zu einem Setzen der Signale hold und ClkBGate1 auf einen hohen Logikpegel sowie des Signals ClkAGate2 auf einen niedrigen Logikpegel.

d) Ein Übergang des Signals hold1 von "0" nach "1" bewirkt ein Setzen des Signals hold2 auf einen hohen Logikpegel (hold2=1) bei einer nächsten steigenden Flanke des zweiten Taktsignals CLK_B.

e) Sobald das Signal hold2 gesetzt ist, wird das Signal hold1 bei der nächsten steigenden Flanke des ersten Taktsignals CLK_A zurückgesetzt.

f) Das Signal flag1 wird bei der nächsten steigenden Flanke des ersten Taktsignals CLK_A zurückgesetzt.

g) Bei zurückgesetztem Signal fiag1 wird das Signal hold2 bei der nächsten steigenden Flanke des zweiten Taktsignals CLK_B zurückgesetzt, was ein zeitgleiches Zurücksetzen des globalen Haltesignals hold bewirkt.

h) Sobald das Signal hold zurückgesetzt wurde, wird das System-Taktsignal SYS_CLK auf der Grundlage des zweiten Taktsignals CLK_B bei der nächsten fallenden Flanke des eingehenden zweiten Taktsignals CLK_B aktiviert.

Nachfolgend wird auch das erfindungsgemäße Umschalten des Systemtakts von dem zweiten Taktsignal CLK_B zurück auf das erste Taktsignal CLK_A nochmals zusammenfassend beschrieben:

a') Das Umschaltungssignal SEL wird von außen angelegt, um eine Systemtaktumschaltung anzufordern. Ein Übergang des Umschaltungssignal SEL von "1" nach "0" dient zur Anforderung einer Umschaltung des Systemtakts von CLK_B nach CLK_A.

b') Der Zustand des SEL-Signals wird mittels des Taktsignals CLK_B abgetastet, um das Signal SEL_2 zu erzeugen und auszugeben. Das SEL-Signal wird darüber hinaus mittels des Taktsignals CLK_A abgetastet, um das Signal SEL_1 zu erzeugen und auszugeben.

c') Eine Veränderung des SEL-Signals (SEL=0) wird bei einer steigenden Flanke des Taktsignals CLK_B abgetastet, was ein Setzen des Takt-Haltesignals hold2 (hold2=1) und des Taktumschaltungs-Sperrsignals flag2 (flag2=1) bewirkt. Gleichzeitig werden auch das Signal hold und das Signal ClkAGate2 auf einen hohen Logikpegel und das Signal ClkBGatel auf einen niedrigen Logikpegel gesetzt.

d') Ein Übergang des Signals hold2 von "0" nach "1" bewirkt ein Setzen des Signals hold1 (hold1=1) bei der nächsten steigenden Flanke des Taktsignals CLK_A.

e') Sobald das Signal hold1 gesetzt ist, wird das Signal hold2 bei der nächsten steigenden Flanke des Taktsignals CLK_B zurückgesetzt.

f') Das Signal flag2 wird bei der nächsten steigenden Flanke des Taktsignals CLK_B zurückgesetzt.

g') Bei zurückgesetztem Signal flag2 wird das Signal hold1 bei der nächsten steigenden Flanke des Taktsignals CLK_A zurückgesetzt, was ein zeitgleiches Zurücksetzen des globalen Haltesignals hold bewirkt.

h') Sobald das Signal hold zurückgesetzt wurde, wird das System-Taktsignal SYS_CLK auf der Grundlage des Taktsignals CLK_A bei der nächsten fallenden Flanke des eingehenden Taktsignals CLK_A aktiviert.

Wie sich aus der obigen Beschreibung des Betriebs der erfindungsgemäßen Taktsynchronisierungsvorrichtung ergibt, erzeugt jedes Steuermodul Gattersignale, die ein Umschalten des Taktes ermöglichen, auf der Grundlage ihrer jeweiligen Eingangstakte, das heißt CLK_A beziehungsweise CLK_B. Dabei erzeugt das Steuermodul 2.5 ausschließlich das Gattersignal ClkBGate1, und das Steuermodul 2.6 erzeugt ausschließlich das Gattersignal ClkAGate2.

Bei einem Reset des Systems (POR=1) wird die standardmäßige Systemtakt-Ausgabe durch die Einstellungen der Gattersignale bestimmt. Vorliegend gilt standardmäßig SYS_CLK=1 sowie ClkBGate1=0 und ClkAGate2=1, d.h. SYS_CLK wird auf hohem Logikpegel gehalten / "eingefroren".

Demgemäß werden im Kontext der vorliegenden Erfindung bei der Systemtaktumschaltung regelmäßig die folgenden Bedingungen eingehalten:

Das dem neuen Systemtakt entsprechende Gattersignal muss immer zunächst freigegeben, das heißt auf einen hohen Logikpegel gesetzt werden, bevor das dem gegenwärtigen Systemtakt entsprechende Gattersignal ausgeschaltet, das heißt auf einen niedrigen Logikpegel gesetzt wird. Beispielsweise wird vor dem Übergang von CLK_A nach CLK_B von einem Grundzustand mit ClkBGate1=O und ClkAGate2=1 zunächst ClkBGate1 gesetzt, bevor ClkAGate2 zurückgesetzt wird, sodass für eine kurze Zeitperiode beim Umschalten des Systemtakts beide Gattersignale gesetzt sind.

Des Weiteren werden die Gattersignale immer durch das jeweilige Steuermodul gesetzt und zurückgesetzt. Beispielsweise wird das Signal ClkBGate1 immer durch das erste Steuermodul 2.5 gesteuert, und das Gattersignal ClkAGate2 wird immer durch das zweite Steuermodul 2.6 gesteuert. Gattersignale werden immer dann gesetzt, wenn das entsprechende Steuermodul das SEL-Signal detektiert. Des Weiteren werden Gattersignale immer dann zurückgesetzt, wenn das hold-Signal detektiert wird.

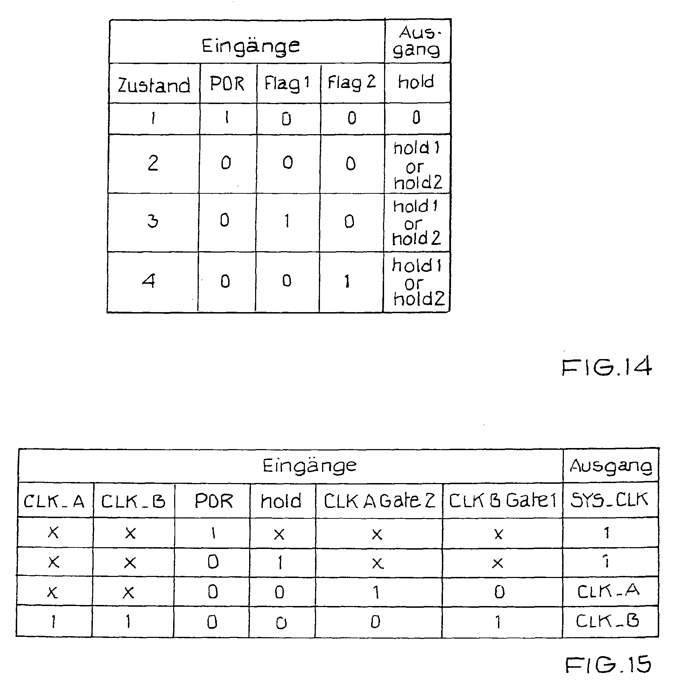

Gemäß der obigen Beschreibung werden die durch das gekoppelte Paar von Steuermodulen erzeugten Ausgangssignale durch den Prozessmultiplexer 2.7 dekodiert, der entsprechend auch als Zustandsdekodierer bezeichnet werden kann. Die Eingabesignale für den Prozessmultiplexer 2.7 wurden bereits anhand von Fig. 2 erläutert. Die Tabelle in Fig. 14 zeigt eine Übersicht über mögliche Zustände des Ausgangssignals hold des Prozessmultiplexers 2.7 in Abhängigkeit von den Eingangssignalen POR, flag1, flag2, SEL_1 und SEL_2.

Fig. 14 zeigt eine tabellarische Übersicht möglicher Zustände eines Ausgangssignals eines Zustandsdekodierers in einer erfindungsgemäßen Taktsynchronisierungsvorrichtung in Abhängigkeit von möglichen Eingangswerten. In Fig. 14 ist ein hoher Logikpegel mit "1" und ein niedriger Logikpegel mit "0" bezeichnet. Das Bezugszeichen "X" gibt einen beliebigen Logikpegel, das heißt wahlweise "0" oder "1" an. "OR" steht für eine logische ODER-Verknüpfung. In Fig. 14 dargestellt sind vier Zustände 1 bis 4, die sich jeweils durch eine bestimme Kombination von Eingangssignalen, das heißt entsprechenden logischen Signalpegeln auszeichnen. Zustand 1 ist ein Reset-Zustand, während dem die Vorrichtung zurückgesetzt wird. Das Taktsignal CLK_A wird als standardmäßiger Systemtakt eingestellt. Es sei angenommen, dass gilt SEL=0. In Zustand 2 (Run-Zustand) befindet sich die Vorrichtung in einem normalen Betriebszustand, das heißt eine Anforderung zum Umschalten des Systemtakts ist nicht mehr gültig oder wurde vollständig ausgeführt. Zustand 3 ist ein A-nach-B-Übergangszustand. Die Vorrichtung ist in einen Umschaltzustand von Taktsignal CLK_A zum Taktsignal CLK_B eingetreten, wobei gilt SEL=1. Dagegen bezeichnet Zustand 4 einen B-nach-A-Übergangszustand. Hier ist die Vorrichtung in einen Umschaltzustand von CLK_B nach CLK_A eingetreten, wobei gilt SEL=0.

Das Taktgatter beziehungsweise ODER-Gatter 2.8 (Fig. 2) fungiert als letztendliche Umschalteinrichtung zum Ausgeben des Systemtakts. Wie weiter oben bereits beschrieben, umfassen die Funktionen dieses Moduls ein:

- Halten der Taktausgabe (SYS_CLK=1), wenn die Anforderung einer Taktumschaltung empfangen wurde, das heißt das SEL-Signal seinen Zustand geändert hat (hold=1);
- Halten der Taktausgabe (SYS_CLK=1), wenn POR einen hohen Logikpegel besitzt (POR=1; Reset-Zustand);
- Anlegen des Taktsignals CLK_A an den Systemtakt-Ausgang 2.4 (Fig. 1, 2), das heißt SYS_CLK=CLK_A, wenn ClkAGate2 gesetzt und ClkBGate1 zurückgesetzt ist (ClkAGate2=1, ClkBGate1=0);
- Anlegen von CLK_B an den Systemtakt-Ausgang (SYS_CLK=CLK_B), wenn ClkAGate2 zurückgesetzt und ClkBGate1 gesetzt ist (ClkAGate2=0, ClkBGate1=1).

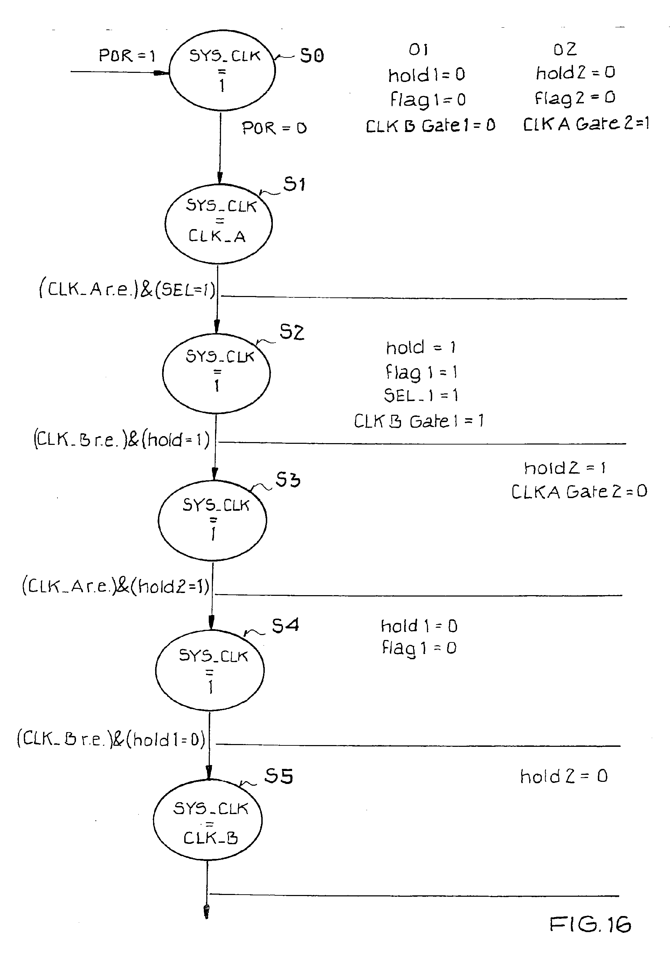

Dies ist in Fig. 15 nochmals zusammenfassend dargestellt.

Fig. 15 zeigt in tabellarischer Form die Ausgabe des Taktgatters (ODER-Gatter 2.8; Fig. 2) in Abhängigkeit von den anliegenden Eingangssignalen. In Fig. 15 bezeichnet der Eintrag "0" einen niedrigen Logikpegel, der Eintrag "1" bezeichnet einen hohen Logikpegel und der Eintrag "X" bezeichnet einen beliebigen Logikpegel. Dargestellt ist der Wert des Ausgangssignals SYS_CLK in Abhängigkeit von Werten der Eingangssignale CLK_A, CLK_B. POR, hold, ClkAGate2 und ClkBGate1.

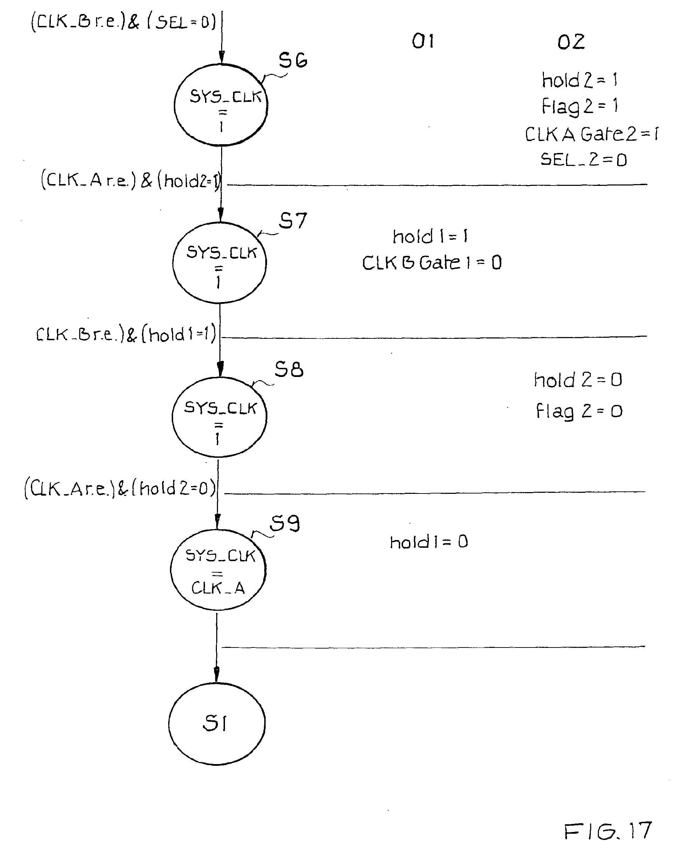

Fig. 16 ist ein Zustandsdiagramm zur Darstellung des Ablaufs einer Ausgestaltung des erfindungsgemäßen Verfahrens beim Umschalten des Systemtakts von einem ersten auf ein zweites Taktsignal. In Fig. 16 sind links in zeitlicher Abfolge, die durch (vertikale) Pfeile symbolisiert ist, unterschiedliche Zustände S1-S5 der erfindungsgemäßen Taktsynchronisierungsvorrichtung 2 (Fig. 2) dargestellt. Zu jedem der Zustände S1-S5 sind rechts in Fig. 16 oberhalb jeweils einer horizontalen Linie entsprechende Ausgaben O1 beziehungsweise 02 des ersten Steuermoduls 2.5 beziehungsweise des zweiten Steuermoduls 2.6 dargestellt, das heißt es sind die Logikpegel maßgeblicher Ausgabesignale der jeweiligen Steuermodule aufgelistet. Die Bezeichnung "r.e." steht in Fig. 16 - wie in der nachfolgenden Fig. 17 - für eine steigende Flanke (rising edge) des jeweils angegebenen Taktsignals CLK_A, CLK_B, wobei jedoch grundsätzlich alternativ auch mit einer fallenden Flanke der Taktsignale getriggert werden kann. Das Zeichen "&" steht für eine logische UND-Verknüpfung. Die in Fig. 16 links auf Höhe einer jeweiligen horizontalen Linie gemachten Angaben stehen für Bedingungen, die erfüllt sein müssen, damit die erfindungsgemäße Taktsynchronisierungsvorrichtung von einem Zustand Si in den nächsten Zustand Sj umschaltet.

Durch (wiederholtes) Anlagen eines Reset-Signals POR=1 gelangt die erfindungsgemäße Vorrichtung in den Reset-Zustand S0, wie weiter oben bereits ausführlich beschrieben.

Wenn POR=0, schaltet die Taktsynchronisierungsvorrichtung in den Zustand S1, und SYS_CLK schaltet um von "1" (hoher Logikpegel) auf CLK_A. In Zustand S1 ist die Ausgabe O1 gebildet aus hold1=0, flag1=0 und ClkBGate1=0. Die Ausgabe 02 ist gebildet aus hold2=0, flag2=0 sowie ClkAGate2=1.

Wenn bei einer steigenden Flanke des ersten Taktsignals CLK_A zugleich gilt SEL=1, schaltet die Vorrichtung in den Zustand S2 um. In diesem Zustand setzt sich die Ausgabe 01 zusammen aus hold1=1, SEL_1=1, flag1=1 und ClkBGate1=1.

Eine steigende Flanke des zweiten Taktsignals CLK_B schaltet bei gleichzeitigem Erfüllen der Bedingung hold1=1 in den Zustand S3 um. In diesem Zustand umfasst die Ausgabe 02 insbesondere hold2=1 und ClkAGate2=0. Eine weitere steigende Flanke des ersten Taktsignals CLK_A führt bei gleichzeitigem Erfüllen der Bedingung hold2=1 zum Zustand S4, in dem sich die Ausgabe 01 durch hold1 =0 und flag1=0 auszeichnet. Anschließend schaltet die Vorrichtung einer weiteren steigenden Flanke des zweiten Taktsignals CLK_B und gleichzeitigem Erfüllen der Bedingung hold1=0 in den Zustand S5, der sich durch die Ausgabe 02 mit hold2=0 auszeichnet und in dem gilt SYS_CLK=CLK_B.

Fig. 17 zeigt ein der Fig. 16 entsprechendes Zustandsdiagramm mit Zuständen S6-S9 für ein Umschalten des Systemtakts von dem (zweiten) Taktsignal CLK_B zurück auf das (erste) Taktsignal CLK_A. Bei einer steigenden Flanke des zweiten Taktsignals CLK_B und gleichzeitigen Erfüllen der Bedingung SEL=0 gelangt die Vorrichtung in Zustand S6, in dem sich 02 zusammensetzt aus hold2=1, flag2=1, ClkAGate2=1 und SEL_2=0. Eine steigende Flanke des ersten Taktsignals CLK_A bei gleichzeitigem Erfüllen der Bedingung hold2=1 löst Zustand S7 aus, in dem sich die Ausgabe O1 auszeichnet durch hold1=1 und ClkBGate1=0. Mit einer weiteren steigenden Flanke des zweiten Taktsignals CLK_B bei gleichzeitigem Erfüllen der Bedingung hold1=1 gelangt das System nach Zustand S8, in dem die Ausgabe 02 gekennzeichnet ist durch hold2=0 und flag2=0. Schließlich bringt eine weitere steigende Flanke des ersten Taktsignals CLK_A bei gleichzeitigem Erfüllen der Bedingung hold2=0 das System in den Zustand S9, in dem für die Ausgabe 01 gilt, dass hold1=0. In Zustand S9 ist der Systemtakt SYS_CLK wieder auf das erste Taktsignal CLK_A umgeschaltet. Dieser Zustand entspricht signaltechnisch dem Zustand S1 (vergleiche Fig. 16).

Das erfindungsgemäße Takt-Umschaltverfahren beziehungsweise die erfindungsgemäße Taktsynchronisierungsvorrichtung besitzen eine Reihe von Vorteilen gegenüber vorbekannten Verfahren beziehungsweise Vorrichtungen zur asynchronen Taktumschaltung: Einerseits ermöglicht die erfindungsgemäße Vorrichtung eine vollständig digitale Implementierung, sodass sie ohne Veränderung von Standard-Logik-Bibliotheken in Hardware synthetisiert werden kann. Darüber hinaus sind bei der Implementierung der vorliegenden Erfindung keinerlei kostenaufwändige Spezialanfertigungen von Schaltungselementen erforderlich.

Beim Betrieb der erfindungsgemäßen Vorrichtung beziehungsweise bei der Durchführung des erfindungsgemäßen Verfahrens bleibt die Systemtakt-Periode und/oder -Frequenz mit Ausnahme einer kurzen Übergangszeit, in welcher der Systemtakt umgeschaltet wird, unverändert. Da die Taktumschaltung immer an einer Taktgrenze (Flanke) erfolgt, ergibt sich keine Veränderung des Duty Cycle mit Ausnahme der Übergangsphase, welche - wie weiter oben ausgeführt wurde - immer länger ist als $2.Tp + T_s$. Darüber hinaus vermeidet die vorgeschlagene optionale Sicherheitslogik das Umschalten auf eine defekte Taktquelle beziehungsweise eine Taktquelle, deren Taktperiode länger ist als erwartet, indem eine Umschaltanforderung zurückgehalten und der ursprüngliche Takt beibehalten wird.

**Bezugszeichenliste**

| | |
|---|---|
| 1 | Schaltungsanordnung |
| 2 | Taktsynchronisierungsvorrichtung |
| 2.1 | erster Eingang |
| 2.2 | zweiter Eingang |
| 2.3 | dritter Eingang |
| 2.4 | Ausgang |
| 3 | Prozessoreinheit (Mikroprozessor) |
| 4. | erster Multiplexer |
| 5 | zweiter Multiplexer |
| 6 | Steuereinheit |
| 2.5 | erstes Steuermodul (Master-Steuermodul) |
| 2.5a | Steuerblock |
| 2.5a' | Zustandsmaschine |
| 2.5b | Zähler |
| 2.5c | Haltesignal-Steuereinheit |
| 2.5d | Sperrsignal-Steuereinheit |
| 2.5e | Gatter-Signal-Steuereinheit |
| 2.5f | Auswahlsignal-Steuereinheit |
| 2.5h | Zähler-Steuereinheit |
| 2.5i | Vergleicher |
| 2.5j | Vergleicher |
| 2.5k | 8-Bit-Leitung |
| 2.6 | zweites Steuermodul (Slave-Steuermodul) |
| 2.6a | Komparator |
| 2.6b | Zähler |
| 2.6c | Haltesignal-Steuereinheit |
| 2.6d | Sperrsignal-Steuereinheit |
| 2.6e | Gatter-Signal-Steuereinheit |
| 2.6f | Eingang |
| 2.7 | Prozessmultiplexer |
| 2.8 | OR-Gatter |

| ASST | Steuersignal |
| CDET | Steuersignal |
| ClkAGate2 | Gatter-Steuersignal |
| ClkBGate1 | Gatter-Steuersignal |
| CLK_1 | externes Taktsignal |
| CLK_2 | externes Taktsignal |
| CLK_n | externes Taktsignal |
| CLK_A | erstes Taktsignal |
| CLK_B | zweites Taktsignal |
| CLK_SEL[n:1] | Steuersignal |
| CNTEN | Steuersignal |
| CNTST | Steuersignal |
| cnt1 | Zählerwert |
| FF1-FF5 | Flip-Flop |
| flag1 | Taktumschaltungs-Sperrsignal |
| flag2 | Taktumschaltungs-Sperrsignal |
| GND | Massepotential |
| hold1 | Takt-Haltesignal |
| hold2 | Takt-Haltesignal |
| hold | globales Takt-Haltesignal |
| hold1_tout | Takt-Haltesignal |
| hold2_tout | Takt-Haltesignal |
| hold_tout | globales Takt-Haltesignal |
| MUX1- | |
| MUX16 | Multiplexer |
| N | Zähler-Endwert |
| POR | Reset-Signal (Power-On-Reset) |
| REG | Register |
| REQD | Steuersignal |
| SEL | Umschaltsignal/ Auswahl- Steuersignal |
| SEL_del | verzögertes Auswahlsignal |
| SEL_1 | erstes Auswahlsignal |
| SEL_2 | zweites Auswahlsignal |
| SW | Steuersignal |
| SYS_CLK | System-Taktsignal |
| SYS_CLK_tout | System-Taktsignal |
| TVAL1 | Eingabewert |
| TVAL2 | Eingabewert |
| VDD | Versorgungsspannung |

**Patentansprüche**

1. Verfahren zum Umschalten eines Systemtakts (SYS_CLK) von einem ersten Taktsignal (CLK_A) auf ein zweites Taktsignal (CLK_B), wobei der Umschaltvorgang durch ein Auswahl-Steuersignal (SEL) ausgelöst wird und das Umschalten synchron zu dem ersten und/oder zweiten Taktsignal erfolgt, **dadurch gekennzeichnet, dass** die Taktsteuerung von einer vorbestimmten Flanke des ersten Taktsignals (CLK_A) auf eine entsprechende Flanke des zweiten Taktsignals (CLK_B) übertragen wird, wobei ein Systemtakt-Signal (SYS_CLK) nach Maßgabe des ersten Taktsignals (CLK_A) auf einem ersten vorbestimmten logischen Signalpegel als Systemtakt-Haltesignal gehalten wird, wobei auf eine entsprechende Flanke des zweiten Taktsignals (CLK_B) gewartet wird und wobei nach Maßgabe des zweiten Taktsignals (CLK_B) das Systemtakt-Haltesignal auf einen zweiten logischen Zustand zurückgesetzt und zugleich das Systemtakt-Signal (SYS_CLK) unter Verwendung des zweiten Taktsignals (CLK_B) reaktiviert wird.

2. Verfahren nach Anspruch 1, **dadurch gekennzeichnet, dass**

   - nach Maßgabe des Auswahl-Steuersignals (SEL) durch ein erstes Steuermodul (2.5) für das erste Taktsignal (CLK_B) ein erstes Takt-Haltesignal (hold1) synchron zu dem ersten Taktsignal (CLK_A) erzeugt wird,
   - das erste Takt-Haltesignal (hold1) an ein zweites Steuermodul (2.6) für das zweite Taktsignal (CLK_B) weitergeleitet wird,
   - durch das zweite Steuermodul (2.6) ein zweites Takt-Haltesignal (hold2) synchron zu dem zweiten Taktsignal (CLK_B) erzeugt wird,
   - aus den ersten und zweiten Taktsignalen (CLK_A, CLK_B) das Sytemtakt-Haltesignal erzeugt wird,
   - das zweite Takt-Haltesignal (hold2) an das erste Steuermodul (2.5) weitergeleitet wird und
   - ein Zustand des ersten Takt-Haltesignals (hold1) in Abhängigkeit von dem weitergeleiteten zweiten Takt-Haltesignal (hold2) verändert wird.

3. Verfahren nach Anspruch 1 oder 2, **dadurch gekennzeichnet, dass** eine Zeit seit Anlegen des Auswahl-Steuersignals (SEL) bestimmt wird und dass das Umschalten des Systemtakt-Signals (SYS_CLK) bei Erreichen einer vorgegebenen Zeitschwelle (TVAL1, TVAL2, N) freigegeben wird.

4. Verfahren nach Anspruch 3, **dadurch gekennzeichnet, dass** die Zeitschwelle (TVAL1) mindestens $2T_p + T_s$ beträgt, wobei $T_p$ eine Periodendauer des ersten Taktsignals (CLK_A) und $T_s$ eine Periodendauer des zweiten Taktsignals (CLK_B) bezeichnet.

5. Verfahren nach einem der Ansprüche 1 bis 4, **dadurch gekennzeichnet, dass** die ersten und zweiten Taktsignale (CLK_A, CLK_B) jeweils aus einer Mehrzahl von Taktsignalen (CLK_1, CLK_2, ..., CLK_n) ausgewählt werden.

6. Taktsynchronisierungsvorrichtung (2) für ein elektronisches System (3), insbesondere für einen Mikroprozessor, aufweisend:

   - einen ersten Eingang (2.1) für ein erstes Taktsignal (CLK_A),
- einen zweiten Eingang (2.2) für ein zweites Taktsignal (CLK_B),
- einen dritten Eingang (2.3) für ein Auswahl-Steuersignal (SEL),
- einen Ausgang (2.4) für ein Systemtakt-Signal (SYS_CLK), **gekennzeichnet durch**
- ein erstes Steuermodul (2.5), das **durch** das erste Taktsignal (CLK_A) gesteuert ist,
- ein zweites Steuermodul (2.6), das **durch** das zweite Taktsignal (CLK_B) gesteuert ist und das signaltechnisch mit dem ersten Steuermodul (2.5) verbunden ist,

wobei das erste Steuermodul (2.5) bei Anliegen eines vorbestimmten Signalpegels des Auswahl-Steuersignals (SEL) an dem dritten Eingang (2.3) synchron mit dem ersten Taktsignal (CLK_A) zum Setzen des Systemtakt-Signals (SYS_CLK) von dem ersten Taktsignal (CLK_A) auf einen vorbestimmten logischen Signalpegel als Systemtakt-Haltesignal ausgebildet ist und wobei das zweite Steuermodul (2.6) synchron mit dem zweiten Taktsignal (CLK_B) zum Zurücksetzen des Systemtakt-Haltesignals und zum Veranlassen einer Ausgabe des zweiten Taktsignals (CLK_B) als Systemtakt-Signal (SYS_CLK) ausgebildet ist.

7. Taktsynchronisierungsvorrichtung (2) nach Anspruch 6, **dadurch gekennzeichnet, dass**

- das erste Steuermodul (2.5) nach Maßgabe des Auswahl-Steuersignals (SEL) zum Erzeugen eines ersten Takt-Haltesignals (hold1) und zum Weiterleiten desselben an das zweite Steuermodul (2.6) ausgebildet ist,
- das zweite Steuermodul (2.6) bei Empfang des ersten Takt-Haltesignals (hold1) zum Erzeugen eines zweiten Takt-Haltesignals (hold2) und zum Weiterleiten desselben an das erste Steuermodul (2.5) ausgebildet ist,
- das erste Steuermodul (2.5) zum Zurücksetzen des ersten Takt-Haltesignals (hold 1) bei Empfang des zweiten Takt-Haltesignals (hold2) ausgebildet ist und
- das zweite Steuermodul (2.6) zum Zurücksetzen des zweiten Takt-Haltesignals (hold2) ausgebildet ist.

8. Taktsynchronisierungsvorrichtung (2) nach Anspruch 6 oder 7, **gekennzeichnet durch** ein Schaltungselement (2.7), das zum Erzeugen eines globalen Takt-Haltesignals (hold) aus wenigstens den ersten und zweiten Takt-Haltesignalen (hold1, hold2) ausgebildet ist.

9. Taktsynchronisierungsvorrichtung (2) nach einem der Ansprüche 6 bis 8, **dadurch gekennzeichnet,** **dass** zumindest das erste Steuermodul (2.5) einen Zähler (2.5b) aufweist, der zum Bestimmen einer Zeit (t) in Abhängigkeit von dem Auswahl-Steuersignal (SEL) ausgebildet ist.

10. Taktsynchronisierungsvorrichtung (2) nach einem der Ansprüche 6 bis 9, **dadurch gekennzeichnet,** **dass** zumindest das erste Steuermodul (2.5) zum Erzeugen eines Taktumschaltungs-Sperrsignals (flag1) in Abhängigkeit von dem Auswahl-Steuersignal (SEL) ausgebildet ist, das zum Verhindern eines Zurücksetzens des Systemtakt-Haltesignals an das zweite Steuermodul (2.6) angelegt ist.

11. Taktsynchronisierungsvorrichtung (2) nach Anspruch 10, **dadurch gekennzeichnet, dass** das erste Steuermodul (2.5) zum Abschalten des Taktumschaltungs-Sperrsignals (flag1) bei Erreichen einer vorgegebenen Zeitschwelle (TVAL1, TVAL2, N) ausgebildet ist.

12. Taktsynchronisierungsvorrichtung (2) nach Anspruch 11, **dadurch gekennzeichnet, dass** die Zeitschwelle (TVAL1, TVAL2, N) insbesondere durch einen Nutzer und insbesondere softwaretechnisch vorgebbar ist, wobei die Zeitschwelle (TVAL1, TVAL2, N) insbesondere mindestens $2 \cdot T_p + T_s$ beträgt, wobei Tp eine Periodendauer des ersten Taktsignals (CLK_A) und $T_s$ eine Periodendauer des zweiten Taktsignals (CLK_B) bezeichnet.

13. Taktsynchronisierungsvorrichtung (2) nach einem der Ansprüche 6 bis 12, **gekennzeichnet durch** jeweils einen Multiplexer (4, 5) in Wirkverbindung mit den ersten und zweiten Eingängen (2.1, 2.2), die zum Auswählen des ersten und zweiten Taktsignals (CLK_A, CLK_B) aus jeweils einer Mehrzahl von Taktsignalen (CLK_1, CLK_2, ..., CLK_n) ausgebildet sind.

14. Prozessoreinheit (3), insbesondere Mikroprozessor, mit einer Taktsynchronisierungsvorrichtung (2) nach einem der Ansprüche 6 bis 13.

15. Verwendung des Verfahrens nach einem der Ansprüche 1 bis 5 zum Umschalten des Systemtakts (SYS_CLK) bei einer Prozessoreinheit (3), insbesondere einem Mikroprozessor.

FIG. 1

FIG.2

FIG.3

Flag 2
hold 2 — ASST **FIG. 4a**

SEL
SEL_1
hold 1 — CDET **FIG. 4b**

SEL_1
Flag 1 — REQ D **FIG. 4c**

SEL_1
CLK B Gate1 — CNT ST **FIG. 4d**

2.5 h

hold 1
A
AND
B
A
OR — CNT EN

**FIG. 5**

$A = (cnt\,1 \leq TVAL\,1)$

$B = (cnt\,1 = 00000001)$

FIG. 6

FIG. 7

FIG. 8

FIG.9

FIG.10

FIG.11

MUX 16    2.7

hold 1
hold 2
GND
hold

flag 2
POR
flag 1

FIG.12

FIG. 13a

FIG.13b

| Eingänge | | | | Aus·gang |
|---|---|---|---|---|
| Zustand | POR | Flag1 | Flag 2 | hold |
| 1 | 1 | 0 | 0 | 0 |
| 2 | 0 | 0 | 0 | hold 1 or hold 2 |
| 3 | 0 | 1 | 0 | hold 1 or hold 2 |
| 4 | 0 | 0 | 1 | hold 1 or hold 2 |

FIG.14

| Eingänge | | | | | | Ausgang |
|---|---|---|---|---|---|---|
| CLK_A | CLK_B | POR | hold | CLK A Gate 2 | CLK B Gate1 | SYS_CLK |
| X | X | 1 | X | X | X | 1 |
| X | X | 0 | 1 | X | X | 1 |
| X | X | 0 | 0 | 1 | 0 | CLK_A |
| 1 | 1 | 0 | 0 | 0 | 1 | CLK_B |

FIG.15

PDR = 1 → ( SYS_CLK = 1 ) ⌒ S0

O1
hold1 = 0
Flag1 = 0
CLK B Gate1 = 0

O2
hold2 = 0
Flag2 = 0
CLK A Gate 2 = 1

POR = 0

( SYS_CLK = CLK_A ) ⌒ S1

(CLK_A r.e.)&(SEL=1) _____

( SYS_CLK = 1 ) ⌒ S2

hold = 1
Flag 1 = 1
SEL_1 = 1
CLK B Gate 1 = 1

(CLK_B r.e.)&(hold=1) _____

hold2 = 1
CLKA Gate2 = 0

( SYS_CLK = 1 ) ⌒ S3

(CLK_A r.e.)&(hold2=1) _____

( SYS_CLK = 1 ) ⌒ S4

hold 1 = 0
Flag 1 = 0

(CLK_B r.e.)&(hold1=0) _____

hold 2 = 0

( SYS_CLK = CLK_B ) ⌒ S5

FIG. 16

(CLK_B r.e.)& (SEL=0)

O1           O2

S6

SYS_CLK
=
1

hold 2 = 1
Flag 2 = 1
CLK A Gate 2 = 1
SEL_2 = 0

(CLK_A r.e.) & (hold2=1)

S7

SYS_CLK
=
1

hold 1 = 1
CLK B Gate 1 = 0

CLK_B r.e.)& (hold 1=1)

S8

SYS_CLK
=
1

hold 2 = 0
Flag 2 = 0

(CLK_A r.e.)& (hold 2=0)

S9

SYS_CLK
=
CLK_A

hold 1 = 0

S1

FIG. 17

**Europäisches Patentamt**

## EUROPÄISCHER RECHERCHENBERICHT

**Nummer der Anmeldung**

EP 07 01 0923

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 01/59550 A (INFINEON TECHNOLOGIES CORP [US]) 16. August 2001 (2001-08-16) * Seite 2, Zeile 26 - Seite 3, Zeile 5 * * Seite 3, letzte Zeile - Seite 13, Zeile 12; Abbildungen 4,5 * | 1-6,9-15 | INV. G06F1/08 |
| X | EP 0 969 350 A (HEWLETT PACKARD CO [US]) 5. Januar 2000 (2000-01-05) * Absätze [0011] - [0015]; Abbildungen 1-2m * | 1-6,9-15 | |
| X | US 6 341 355 B1 (RUTHERFORD MARK D [US] ET AL) 22. Januar 2002 (2002-01-22) * Spalte 6, Zeile 13 - Spalte 12, Zeile 8; Abbildungen 5-10 * | 1-6,9-15 | |
| X | US 2004/263217 A1 (HUTSON MATT [US] ET AL HUTSON MATT [GB] ET AL) 30. Dezember 2004 (2004-12-30) * Absätze [0014] - [0038]; Abbildungen 1-5 * | 1-6,9-15 | RECHERCHIERTE SACHGEBIETE (IPC) |
| A | US 2002/125914 A1 (KIM BONG KYUN [KR]) 12. September 2002 (2002-09-12) * das ganze Dokument * | 1-15 | G06F H04J |

Der vorliegende Recherchenbericht wurde für alle Patentansprüche erstellt

| Recherchenort | Abschlußdatum der Recherche | Prüfer |
|---|---|---|
| München | 18. Oktober 2007 | Vertua, Arturo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 01 0923

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-10-2007

| Im Recherchenbericht angeführtes Patentdokument | | Datum der Veröffentlichung | Mitglied(er) der Patentfamilie | | Datum der Veröffentlichung |
|---|---|---|---|---|---|
| WO 0159550 | A | 16-08-2001 | EP<br>JP<br>TW<br>US | 1264229 A2<br>2003523111 T<br>483241 B<br>6535048 B1 | 11-12-2002<br>29-07-2003<br>11-04-2002<br>18-03-2003 |
| EP 0969350 | A | 05-01-2000 | JP<br>US | 2000138568 A<br>6275546 B1 | 16-05-2000<br>14-08-2001 |
| US 6341355 | B1 | 22-01-2002 | KEINE | | |
| US 2004263217 | A1 | 30-12-2004 | KEINE | | |
| US 2002125914 | A1 | 12-09-2002 | KR 20020072049 A | | 14-09-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6873183 B1
- US 5675165 B1
- US 6107841 B1
- US 5675165 A